# EUROPEAN PATENT APPLICATION

(11) **EP 2 261 832 A1**
(43) Date of publication of application: **15.12.2010**
(21) Application number: 09713679.0
(22) Date of filing: 23.02.2009
(51) Int. Cl.: G06F 21/22

(54) **INFORMATION PROCESSING DEVICE**

(30) Priority: 25.02.2008 JP 2008043007
(71) Applicant: Panasonic Corporation, Kadoma-shi Osaka 571-8501 (JP)
(72) Inventor: HAGA, Tomoyuki, Osaka 540-6207 (JP); MATSUSHIMA, Hideki, Osaka 540-6207 (JP); TAKAYAMA, Hisashi, Osaka 540-6207 (JP); ITO, Takayuki, Osaka 540-6207 (JP); MAEDA, Manabu, Osaka 540-6207 (JP)
(74) Representative: Grünecker, Kinkeldey, Stockmair & Schwanhäusser Anwaltssozietät
(86) International application number: PCT/JP2009/000757
(87) International publication number: WO 2009/107349

(57) **Abstract**

A terminal having a plurality of virtual machines in one-to-one correspondence with a plurality of stakeholders is enabled to activate in compliance with the trust dependency relation among the virtual machines and a virtual machine monitor. The terminal includes: the plurality of virtual machines in one-to-one correspondence with the plurality of stakeholders; a plurality of tamper-resistant modules in one-to-one correspondence with the virtual machines, and a management unit controlling the virtual machines and the tamper-resistant modules in mutually related manner. Each virtual machine securely boots with reference to a certificate having a trust dependency with one or other virtual machines.

## Description

### [Technical Field]

The present invention relates to a multi-stakeholder device provided with the use of a virtualization technique, and more specifically to an information processing device capable of a secure boot process based on the dependency between the stakeholders.

### [Background Art]

With the recent increase in demand for information security, the need for data protection technology is increasing.

With this as a backdrop, the Trusted Computing Group (TCG) has been formed to develop and promote secure computer platforms. The TCG uses a security core module called a Trusted Platform Module (TPM) to implement a secure terminal environment (Non-Patent Literatures 1-3). The basic functions provided by the TCG include the following two characteristic functions. One is the Trusted Boot function to measure the integrity information of each module during the boot-sequence prior to the activation of the OS and applications, perform a cumulating process of chaining the measured values with the integrity information of the previous module (which is a process corresponding to TCG's TPM_Extend command), and store the chained values into registers called Platform Configuration Registers (PCRs) provided in the TPM. The other is the Attestation function to supply the values accumulated in the PCRs as terminal environmental information to an external server, so that the external server can verify whether it is expected environmental information. One advantage of the TCG technology is that the authenticity of the terminal environment is remotely verified with the use of the functions mentioned above.

In addition, the TCG is targeting mobile phones as TPM-embedded terminals and sets out the TPM specifications specific for mobile phones (Non-Patent Literatures 3 and 4). Note that the TPM for mobile phones are called Mobile Trusted Module (MTM). Without compromising the realization of the TPM functions, the MTM includes some commands modified specifically for mobile phones and also includes additional new commands. As the additional functions, a secure boot function and a multi-stakeholder model are defined.

The secure boot refers to a boot scheme according to which integrity information of each module is measured during the boot phase of a mobile phone terminal to locally check whether the measured values of each module match the expected values, before running OS and applications.

The multi-stakeholder model refers to an implementation model defined to ensure the secure use of the individual interests of a plurality of stakeholders present in a mobile phone terminal. Examples of the stakeholders include the device maker, carrier, application service provider, and user. Examples of the stakeholders' interests include: International Mobile Equipment Identity (IMEI) in the case of the device maker; Subscriber Identification Module (SIM) in the case of the carrier; supplied service data in the case of the application service provider; and address-book data in the case of the user. In short, the multi-stakeholder model refers to a model in which the individual stakeholders are assigned to use different MTMs, so that the their individual interests are securely protected. With the use of a virtualization technique, a plurality of MTMs are virtually implemented within a single terminal.

Patent literature 1 discloses a technique of implementing a virtual TPM with the use of virtualization technique.
[Patent Literature 1]
   JP patent application publication No. 2008-500651
[Non-Patent Literature 1]
   TPM Main, Part 1 Design Principles, Specification version 1.2 Level 2 Revision 103 (9 July 2007)
[Non-Patent Literature 2]
   TPM Main, Part 2 TPM Structures, Specification version 1.2 Level 2 Revision 103 (9 July 2007)
[Non-Patent Literature 3]
   TPM Main, Part 3 Commands, Specification version 1.2 Level 2 Revision 103 (9 July 2007)
[Non-Patent Literature 4]
   TCG Mobile Trusted Module Specification version 1.0 Revision 1 (12 June 2007)
[Non-Patent Literature 5]
   TCG Mobile Reference Architecture Specification version 1.0 Revision 1 (12 June 2007)

### [Summary of Invention]

### [Technical Problem]

Patent literature 1 discloses a method for running a virtual machine on a virtual machine monitor with the use of the virtualization technique. Each TPM used by the virtual machine is implemented as a virtual TPM. Sensitive information related to the keys and certificates of the virtual TPM is protected with the use of physical TPM separately provided within the terminal. According to the implementation model of the Patent literature 1, the chained integrity values of up to the layer of the virtual machine monitor obtained during the boot phase are stored into the PCRs of the physical TPM. In addition, the chained integrity values of the virtual machine are stored into the PCRs of the virtual TPM assigned to that virtual machine. Note that the virtualization technique is to enable a virtual machine to run as if it is one actual machine. Therefore, the chaining of the integrity values during the secure boot according to the TCG is ended when the chaining reaches the integrity values of the virtual machine. That is, the chain of integrity is cut off at some point between activation of the virtual machine monitor and the virtual machine. As a result, a problem arises that the authenticity of the terminal environment cannot be verified by checking the integrity values because the authenticity of any layer below the virtual machine, i.e., the layer of the virtual machine monitor, cannot be verified.

Further, the multi-stakeholder model defines a trust model in which one stakeholder depends on another stakeholder. More specifically, the trust model is for enabling, for example, a carrier to make reference to the IMEI data, which is the proprietary interest of a device maker, with the use of the MTM of the device maker. In this example, the carrier uses the device maker's MTM function after trusting the device maker's environment. However, the technique of Patent literature 1 is based on the precondition that there is no trust relationship between virtual machines, which gives a rise to another problem that the correct implementation of the multi-stakeholder model defining such a trust model cannot be verified and that the boot based on the correct trust model cannot be verified.

In order to solve the above problems, the present invention aims to provide a method for secure boot in compliance with the multi-stakeholder model realized by the virtualization technique, based on the trust relationship between the stakeholders (trust model) defined by the multi-stakeholder model and also to provide a method for verifying the authenticity of the terminal including the environment of the virtual machine monitor.

### [Solution to Problem]

In order to solve the problems noted above, the present invention provides an information processing device on which a plurality of virtual machines run and includes a dependency information storage unit and a virtual machine management unit. The dependency information storage unit stores therein dependency information for each virtual machine. Each piece of dependency information indicates whether a corresponding virtual machine uses one or more functions of another virtual machine or does not use any function of another virtual machine. The virtual machine management unit is operable to manage activation of the virtual machines. If a piece of dependency information for a virtual machine targeted to be activated indicates that one or more functions of another virtual machine are used, the virtual machine management unit determines that the target virtual machine depends on the other virtual machine; and controls an activation order of the virtual machines so that the target virtual machine is activated after the other virtual machine is activated.

### [Advantageous Effects of Invention]

With the above configuration, the information processing device according to one aspect of the present invention is enabled to specify one or more of a plurality of virtual machines each of which uses the function of another virtual machine and activate each specified virtual machine only after the other virtual machine is activated, thereby ensuring that the specified virtual machine can use the function of the other virtual machine. Consequently, the plurality of virtual machines are activated under the state where the predetermined trust relationship is ensured.

### [Brief Description of Drawings]

FIGs. 1A, 1B and 1C are views each showing a trust model in a multi-stakeholder model according to Embodiment 1 of the present invention.
FIG 2 is a view showing an information processing terminal according to Embodiment 1 of the present invention.
FIG 3 is a view showing the configuration of a virtual machine according to Embodiment 1 of the present invention.
FIG 4 is a view showing the configuration of a virtual machine monitor according to Embodiment 1 of the present invention.
FIG 5 is a view showing the configuration of a TPM certificate according to Embodiment 1 of the present invention.
FIGs. 6A, 6B and 6C are views showing different trust models with the TPM certificate according to Embodiment 1 of the present invention.
FIG 7 is a view showing a module certificate according to Embodiment 1 of the present invention.
FIG 8 is a flowchart of a secure boot in compliance with a trust model according to Embodiment 1 of the present invention.
FIG 9 is a flowchart of setting the PCR's initial values according to Embodiment 1 of the present invention.
FIG 10 is a flowchart of the details of the secure boot according to Embodiment 1 of the present invention.
FIG 11 is a view showing an Attestation model according to Embodiment 2 of the present invention.
FIG 12 is a sequence diagram showing the Attestation model according to Embodiment 2 of the present invention.
FIG. 13 is a view showing the configuration of an information processing terminal according to Embodiment 3 of the present invention.

### [Reference Signs List]

- 101,102, 111, 112, 121, 122: stakeholder
- 103, 104, 113, 114, 123: TPM
- 10, 1000, 1200: information processing terminal
- 11, 1280: CPU
- 12, 1281: I/O device
- 13, 1282: volatile memory
- 14, 1283: non-volatile memory
- 20, 30,1010, 1020,1210, 1220: virtual machine
- 21, 31,1211,1222: virtual TPM interface
- 22, 32, 1212, 1223: virtual device driver
- 25,35: application
- 24, 34: guest OS
- 23,33: OS loader
- 40, 1030, 1203: virtual machine monitor
- 41, 1260: device driver
- 42, 1250: TPM interface
- 50, 1033, 1202: virtual TPM control unit
- 60, 70, 1230, 1240: virtual TBB
- 61, 71, 1231, 1241: virtual measurement and verification unit
- 62, 72, 1031, 1032, 1232, 1242: virtual TPM
- 80, 1270: TBB
- 81, 1271: measurement and verification unit
- 82, 1040, 1272: TPM
- 63,73,83: PCR
- 410: trust model management unit
- 411: TPM certificate
- 412, 413: virtual TPM certificate
- 420: boot control unit
- 421: module certificate storage unit
- 422: PCR initial value setting unit
- 423: boot control unit
- 501: certificate version
- 502: serial number
- 503,703: signature algorithm
- 504: issuer information
- 505: validity period
- 506: subject
- 507: public key information
- 508: TPM version
- 509: trust model identification information
- 510: dependent TPM certificate identification information
- 511: dependent TPM-PCR number
- 512: extended partition
- 513, 708: signature data
- 701: module identification information
- 702: module version information
- 704: authentication integrity value
- 705: authentication PCR value
- 706: PCR index
- 707: verification key identification information
- 2000: service provider server
- 3000: network
- 2001: AIK certificate database
- 2002: authentication PCR database
- 2003: trust model management database
- 1011, 1021: notification unit
- 1021: management machine
- 1204: virtual TPM control notification unit

### [Description of Embodiments]

According to one aspect of the present invention recited in claim 1, the information processing device on which a plurality of virtual machines run includes a dependency information storage unit and a virtual machine management unit. The dependency information storage unit stores therein dependency information for each virtual machine. Each piece of dependency information indicates whether a corresponding virtual machine uses one or more functions of another virtual machine or does not use any function of another virtual machine. The virtual machine management unit is operable to manage activation of the virtual machines. If a piece of dependency information for a virtual machine targeted to be activated indicates that one or more functions of another virtual machine are used, the virtual machine management unit is operable to determine that the target virtual machine depends on the other virtual machine and to control an activation order of the virtual machines so that the target virtual machine is activated after the other virtual machine is activated.

Optionally, the information processing device may further include: a plurality of state storage units in one-to-one correspondence with the virtual machines, Each state storage unit stores therein verification information used to verify integrity of a function of a corresponding virtual machine. If the target virtual machine to be activated depends on another virtual machine, the virtual machine management unit is operable to: read, from the state storage unit corresponding to the other virtual machine, verification information for each function used by the target virtual machine; and set contents of the state storage unit of the target virtual machine to reflect the read pieces of verification information.

With this configuration, each of the plurality of virtual machines is activated and run under the state where the integrity of another virtual machine having a function related to the verification information is inherited. Thus, the verification is performed with the use of verification information, under the state where the trust relationship between virtual machines is maintained. Consequently, it is verified whether the virtual machines are activated under the state where the trust relationship is maintained, which in turn ensures a secure boot under the state where the trust relationship is maintained.

Optionally, each state storage unit may have a plurality of storage areas and each piece of verification information used to verify a function of the virtual machine corresponding to the state storage unit may be held in one of the storage areas. If the piece of dependency information for the target virtual machine indicates that one or more functions of another virtual machine are used, the virtual machine management unit is operable to set the contents of the state storage unit of the target virtual machine so as (i) to reflect every piece of verification information held in storage areas corresponding to the one or more functions of the other virtual machine used by the target virtual machine and (ii) not to reflect any piece of verification information held in storage areas not corresponding to the one or more functions of the other virtual machine used by the target virtual machine.

With this configuration, in order to use one or more, rather than all, of the functions of another virtual machines, pieces of the verification information corresponding to each function used is inherited. That is, of a plurality of functions of the virtual machines to be activated, regarding a function that uses a function of another virtual machine, the authenticity verification involves verification of the authenticity of the function of the other virtual machine. On the other hand, regarding a function that does not use a function of any other virtual machine, the authenticity verification is completed within that virtual machine. With this arrangement, the individual functions are verified in a way appropriately reflecting the trust relationship between virtual machines.

Optionally, the information processing device may further include: a plurality of tamper-resistant modules in one-to-one correspondence with the virtual machines. Each state storage unit may be included in a corresponding one of the tamper-resistant modules and functions of each virtual machine may be implemented by one of the tamper-resistant modules corresponding to the virtual machine.

With this configuration, it is ensured that the verification information passed between virtual machines are not tampered with and that the individual functions executed are not tampered with.

Optionally, each virtual machine may correspond to one of a plurality of stakeholders. Each stakeholder may be one of stakeholder models including: a first stakeholder model in which a virtual machine corresponding to the stakeholder only uses functions of the virtual machine; a second stakeholder model in which a virtual machine corresponding to the stakeholder uses less than all functions of another virtual machine; and a third stakeholder model in which a virtual machine corresponding to the stakeholder uses all functions of another virtual machine. Each piece of dependency information may indicate whether a stakeholder model of a corresponding virtual machine is the first, second or third stakeholder models. The virtual machine management unit may be operable to identify the stakeholder model of the target virtual machine to be activated, based on the dependency information for the target virtual machine.

Optionally, each piece of dependency information may include: information indicating another virtual machine having one or more functions used by a virtual machine corresponding to the piece of dependency information; and information indicating one or more storage areas of the other virtual machine, each storing a piece of verification information for the one or more functions used by the virtual machine corresponding to the piece of dependency information.

Optionally, if the piece of dependency information for the target virtual machine to be activated includes information indicating less than all storage areas of another virtual machine as the storage areas each storing a piece of verification information for a function used by the target virtual machine, the virtual machine management unit may be operable to determine that the stakeholder model of the target virtual machine is the second stakeholder model.

Optionally, if the piece of dependency information for the target virtual machine to be activated includes information indicating all storage areas of another virtual machine as the storage areas each storing a piece of verification information for a function used by the target virtual machine, the virtual machine management unit may be operable to determine that the stakeholder model of the target virtual machine is the third stakeholder model.

With this configuration, the stakeholder model of a virtual machine is accurately identified and the virtual machine is activated based on the identified stakeholder model.

Optionally, each function of the virtual machines may be implemented by one or more modules. Each time a module implementing a function of one of the virtual machines is activated, the state storage unit of the virtual machine may be operable to update the verification information held therein, by accumulating information indicating the activated module along with the currently held verification information. The virtual machine management unit may be operable to store, as an initial value of the verification information, the verification information for each function used by the target virtual machine to the state storage unit of the target virtual machine, so that the contents of the state storage unit of the target virtual machine reflect the verification information of each function of the other virtual machine used by the target virtual machine.

With this configuration, when generating verification information, each virtual machine inherits, as an initial value of the verification information to be generated, the verification information of another virtual machine. As a consequence, the resultant verification information serves to ensure the integrity of the other virtual machine as well.

Optionally, upon completion of activation of all the virtual machines in the other controlled by the virtual machine management unit, the information processing device may be operable to verify integrity of the entire information processing device based on the pieces of verification information held in the state storage units.

With this configuration, the integrity is ensured of an entire device in which a virtual machine is embedded.

Optionally, the information processing device may further include: a receiving unit operable to receive an authentication request from an external server; and a transmitting unit operable to transmit, upon completion of activation of all the virtual machines in the other controlled by the virtual machine management unit, the pieces of verification information held in the state storage units to the external server.

With this configuration, the server device that provides a service is enabled to verify the integrity of the information processing device.

Optionally, the information processing device may further include: a management state storage unit operable to store verification information used to verify integrity of one or more functions of the virtual machine management unit Each piece of dependence information may further include management dependency information indicating whether a corresponding virtual machine uses one or more functions of the virtual machine management unit or does not use any function of the virtual machine management unit, If the piece of dependency information corresponding to the target virtual machine to be activated indicates that the target virtual machine uses one or more functions of the virtual machine management unit, the virtual machine management unit may be operable to: read, from the management state storage unit, verification information corresponding to each function used by the target virtual machine, and set the contents of the state storage unit of the target virtual machine to reflect the read pieces of verification information.

With this configuration, each of the plurality of virtual machines is activated and run under the state where the integrity of a specific virtual machine or virtual machine management unit indicated by a piece of dependency information corresponding to the specific virtual machine is inherited. Consequently, the authenticity of the terminal is verified including the authenticity of the environment of the virtual machine monitor (virtual machine management unit).

According to one aspect of the present invention recited in claim 13, a mobile terminal on which a plurality of virtual machines run includes: a dependency information storage unit and a virtual machine management unit. The dependency information storage unit stores therein dependency information for each virtual machine. Each piece of dependency information indicates whether a corresponding virtual machine uses one or more functions of another virtual machine or does not use any function of another virtual machine. The virtual machine management unit is operable to manage activation of the virtual machines. If a piece of dependency information for a virtual machine targeted to be activated indicates that one or more functions of another virtual machine are used, the virtual machine management unit is operable to: determine that the target virtual machine depends on the other virtual machine; and control an activation order of the virtual machines so that the target virtual machine is activated after the other virtual machine is activated.

According to one aspect of the present invention recited in claim 14, a control method for an information processing device on which a plurality of virtual machines run. The information processing device includes a dependency information storage unit that stores therein dependency information for each virtual machine. Each piece of dependency information indicates whether a corresponding virtual machine uses one or more functions of another virtual machine or does not use any function of another virtual machine. The control method includes the steps of: determining that the target virtual machine depends on the other virtual machine; and controlling an activation order of the virtual machines so that the target virtual machine is activated after the other virtual machine is activated.

According to one aspect of the present invention recited in claim 15, a recording medium storing a control program for an information processing device on which a plurality of virtual machines run. The information processing device include a dependency information storage unit that stores therein dependency information for each virtual machine. Each piece of dependency information indicates whether a corresponding virtual machine uses one or more functions of another virtual machine or does not use any function of another virtual machine. The control program includes code operable to cause the information processing device to perform the steps of: determining that the target virtual machine depends on the other virtual machine; and controlling an activation order of the virtual machines so that the target virtual machine is activated after the other virtual machine is activated.

According to one aspect of the present invention recited in claim 16, an integrated circuit integrated circuit for controlling an information processing device on which a plurality of virtual machines run. The information processing device includes a dependency information storage unit that stores therein dependency information for each virtual machine. Each piece of dependency information indicates whether a corresponding virtual machine uses one or more functions of another virtual machine or does not use any function of another virtual machine. The integrated circuit is operable to manage activation of the virtual machines. If a piece of dependency information for a virtual machine targeted to be activated indicates that one or more functions of another virtual machine are used, the integrated circuit is operable to: determine that the target virtual machine depends on the other virtual machine; and control an activation order of the virtual machines so that the target virtual machine is activated after the other virtual machine is activated.

With the above configurations, it is enabled to specify one or more of a plurality of virtual machines that uses the function of another virtual machine and activate the specified virtual machine only after the other virtual machine is activated, thereby ensuring that the specified virtual machine can reliably use the function of the other virtual machine.
The following now describes embodiments of the present invention with reference to the drawings.

### (Embodiment 1)

Now, Embodiment 1 of the present invention is described. The following description is given based on a precondition that the TPM mentioned in the present embodiment is a security core module having the functionality of Trusted Platform Module according to the TCG standards.

### <Trust Model of Multi-Stakeholder Model>

First, multi-stakeholders are described by way of an example directed to a mobile phone. Regarding a mobile phone, there are multiple of stakeholders including the device maker, carrier, application service provider, and user. Each stakeholder holds their own interest in the mobile phone. Examples of the stakeholders' interests include: International Mobile Equipment Identity (IMEI) in the case of the device maker, Subscriber Identification Module (SIM) in the case of the carrier, supplied service data in the case of the application service provider, and address-book data in the case of the user. In short, the multi-stakeholder model refers to a model in which the individual stakeholders are separately assigned to use TPMs, so that the propriety interest of the respective stakeholders are securely protected.

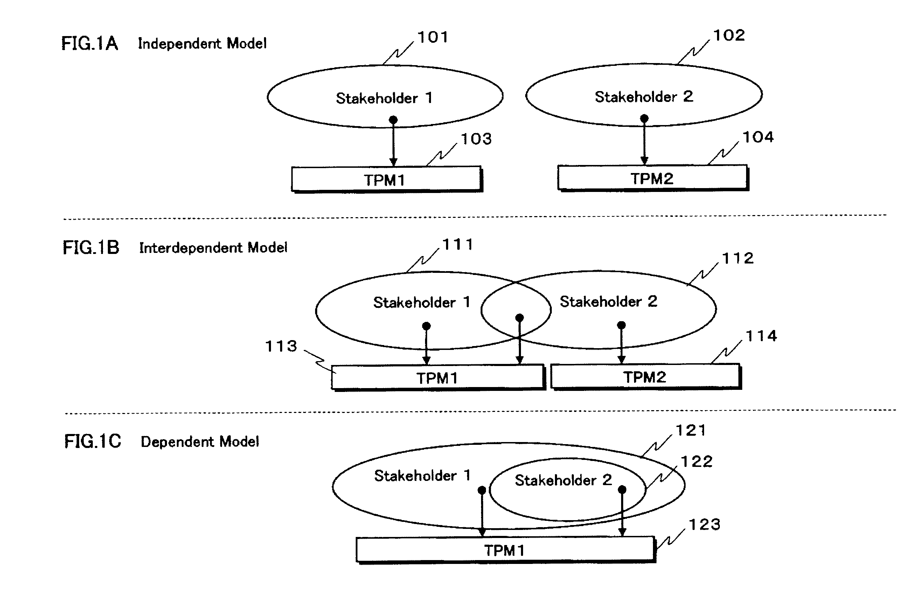

FIGs. 1A, 1B and 1C are views each showing a trust model in a multi-stakeholder model.
Three trust models are defined. Although not shown in FIGs. 1A-1C, the stakeholders manage their respective interests and each interest is securely accessed with the use of a TPM assigned to a corresponding stakeholder. The following describes the three models one by one.

FIG 1A shows an independent model. In this model, there is no trust dependency between the stakeholders. In one example ofthis model, Stakeholder 1 (101) uses TPM 1 (103) and Stakeholder 2 (102) uses TPM 2 (104).

FIG 1B shows an interdependent model. In this model, a stakeholder is partially dependent on another stakeholder. In one example ofthis model, Stakeholder 1 (111) uses TPM 1 (113) and Stakeholder 2 (112) uses TPM 2 (114). The description up to this point is the same as that of the independent model. Yet, as shown in FIG 1B, the bounds of the respective stakeholders overlap partially. This illustration represents that Stakeholder 2(112) uses one or more functions of TPM 1 (113) besides TPM 2 (114). In one example related to a mobile phone, Stakeholder 2 (112) may be the carrier, and Stakeholder 1 (111) may be the device maker. In this case, the carrier accesses IMEI, which is the interest owned by the device maker.

FIG 1C shows a dependent model. In this model, one stakeholder is entirely dependent on another stakeholder. In one example of this model, Stakeholder 1 (121) uses TPM 1 (123) and Stakeholder 2 (122) also uses TPM 1 (123). In one example related to a mobile phone, Stakeholder 2 may be the carrier and Stakeholder 1 may be the device maker. In this case, IMEI, which is an interest owned by the device maker is protected by the function of TPM 1 (123), and SIM information, which is an interest of the carrier is securely protected also with the use of the function ofTPM 1 (123).

### <Information Processing Terminal>

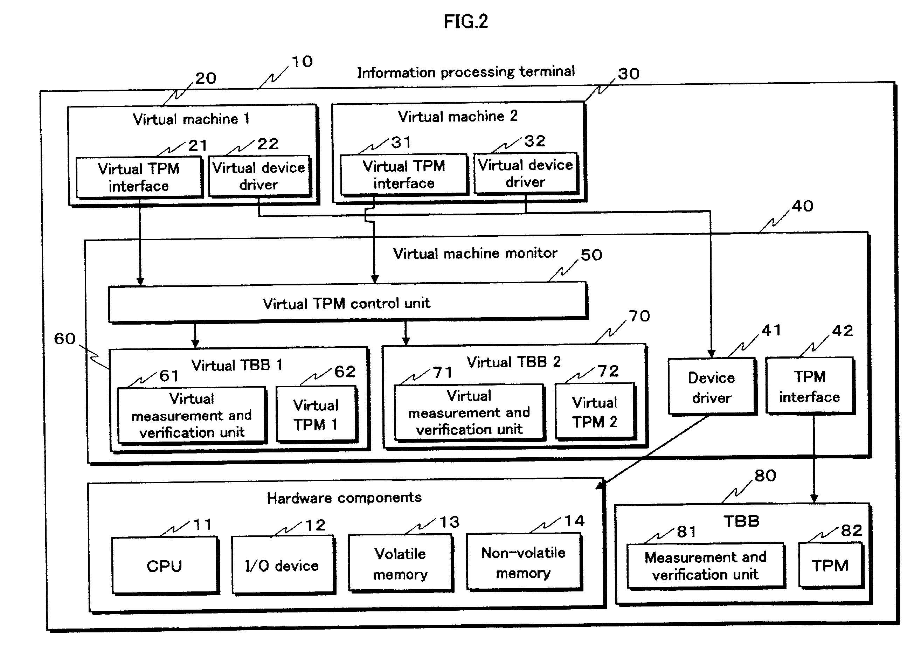

FIG 2 is a block diagram showing the entire configuration of an information processing terminal of a multi-stakeholder model implemented with the use of virtualization technique.

The information processing terminal 10 is composed of hardware components and software components. The hardware components include a CPU 11, an I/O device 12, volatile memory 13 such a RAM, non-volatile memory 14 such as ROM or Flash. The software components include a trusted building block (hereinafter abbreviated as "TBB") 80 which in turn includes a TPM 82, a virtual machine monitor 40 which in turn includes a virtual TPM control unit 50 and virtual trusted building blocks (hereinafter abbreviated as "virtual TBBs") 60 and 70, and virtual machines 20 and 30. The software components such as the virtual machines 20 and 30 and the virtual machine monitor 40 are implemented by the CPU 11 executing programs stored in the volatile or non-volatile memory. In the configuration shown in FIG 2, the TPM 82 is not a hardware component. Naturally however, the TPM 82 may be a hardware component. In addition, as long as the information processing terminal 10 is provided with a secure runtime environment, the TPM 82 may be implemented as a software component. Yet, in Embodiment 1, the TPM 82 is described as a hardware component

The TBB 80 is composed of the TPM 82 and a measurement and verification unit 81. The TPM 80 is a security module having the functionality of Trusted Platform Module specified by the TCG The measurement and verification unit 81 corresponds to Root of Trust for Measurement (RTM) and Root of Trust for Verification (RTV) specified by the TCG and is the first module activated in the secure boot sequence. In the case where the terminal does not support secure boot and only supports trusted boot, the measurement and verification unit 81 may correspond only to Core Root of Trust for Measurement (CRTM) without RTV. The measurement and verification unit 81 is included in a boot ROM not shown in FIG 2. The boot ROM stores an initial program loader (IPL) and so on. Further, it is preferable that the boot ROM used herein is a secure ROM that is not rewritable.

The virtual machine monitor 40 includes the virtual TPM control unit 50, the virtual TBBs 60 and 70, a device driver 41, and a TPM interface 42 and is a software component that provides an infrastructure for running the virtual machines 20 and 30.

The virtual TBB 1 (60) is a trusted building block for use by the virtual machine 1 (20) and includes a virtual measurement and verification unit 61 and a virtual TPM 1 (62). The virtual TBB 1 (60) is a component virtually realizing the same function as that of the TBB 80. The virtual TPM 1 (62) is a component virtually realizing the same function as that of the TPM 82. The virtual measurement and verification unit 61 is a component virtually realizing the same function as that of the measurement and verification unit 81. To "virtually realize" used herein refers to software implementation.

The virtual TBB 2 (70) is a trusted building block for use by the virtual machine 2 (30). The virtual TBB 2 (70) and the virtual measurement and verification unit 71 and the virtual TPM 2 (72) included therein have the same functions as that of the virtual TBB 1 (60) described above. Therefore, no description thereof is given here to avoid redundancy.

Roughly speaking, the virtual TPM control unit 50 manages virtual TPMs. More specifically, the virtual TPM control unit 50 selectively passes TPM commands requested from the virtual machines 20 and 30 via virtual TPM interfaces 21 and 22 to appropriate one of the virtual TPMs 62 and 72 and returns the processing results to appropriate one of the virtual machines 20 and 30.

The TPM interface 42 is an interface used for accessing the TPM 82. In one example, the TPM interface 42 is a trusted software stack (TSS) which is a TCG's software stack.

The device driver 41 is driver software used to access hardware components such as the I/O device.

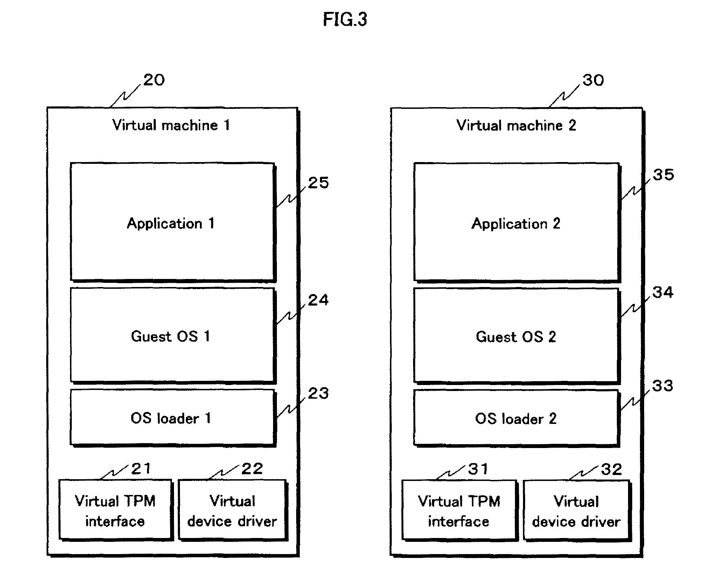

The virtual machine 1 (20) and the virtual machine 2 (30) are virtual machines running on the virtual machine monitor 40, and one virtual machine operates as one stakeholder environment. The details of the virtual machines 1 and 2 are described below with reference to FIG 3.

### <Virtual Machine>

As described above, the virtual machine 1 (20) operates as one stakeholder and includes an OS loader 1 (23), a guest OS 1 (24), an application 1 (25), and a virtual TPM interface (21). The virtual TPM interface (21) is for accessing the virtual TPM (62) and corresponds to a TSS interface specified by the TCG Although the substance of the TSS is not illustrated in the figures, the TSS is implemented on the virtual machine monitor 40.

The virtual machine 1 (20) is activated after the virtual machine monitor (40) is activated. The activation sequence of the virtual machine is performed in the order of the OS loader 1 (23), the guest OS 1 (24) and the application 1 (25). At the boot time of the virtual machine 1 (20), the virtual machine 1 (20) uses the function of the virtual TPM 1 (62) via the virtual TPM interface 21.

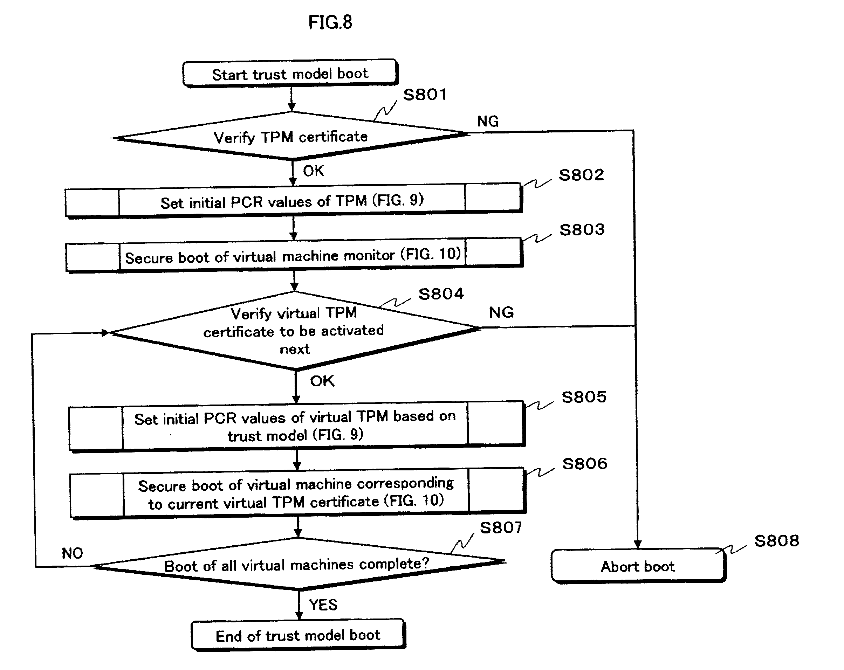

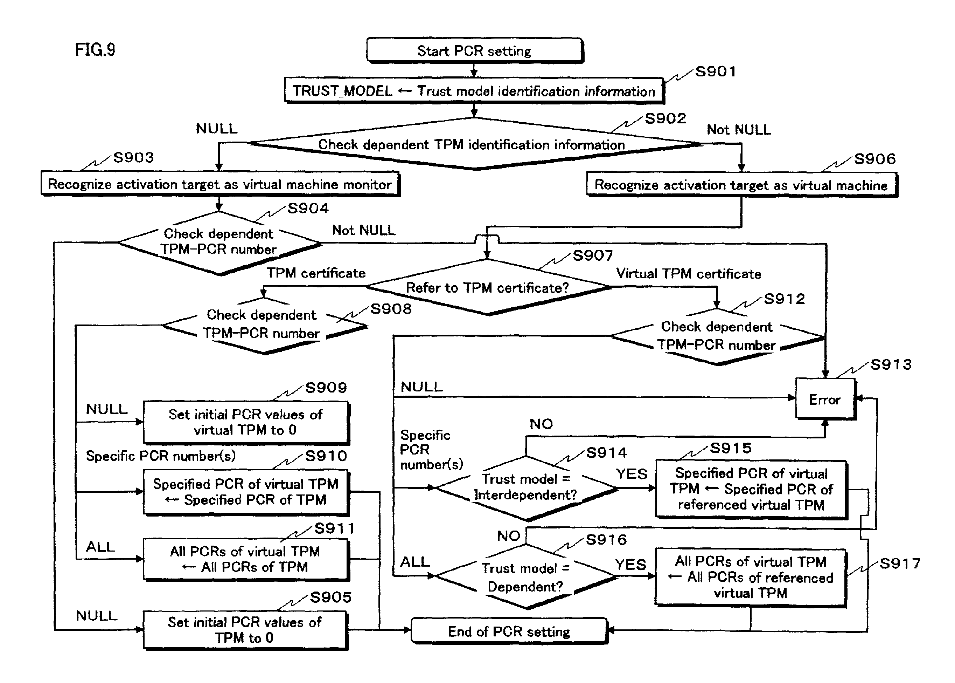

The virtual machine 2 (30) is also activated after the virtual machine monitor (40) is activated. The activation sequence of the virtual machine is performed in the order of the OS loader 2 (33), the guest OS 2 (34) and the application 2 (35). At the boot time of the virtual machine 2 (30), the virtual machine 2 (30) uses the function of the virtual TPM 2 (72) via the virtual TPM interface 31. The details of the boot sequence will be described later with reference to FIGs. 8 and 9.

### <Vutual Machine Monitor>

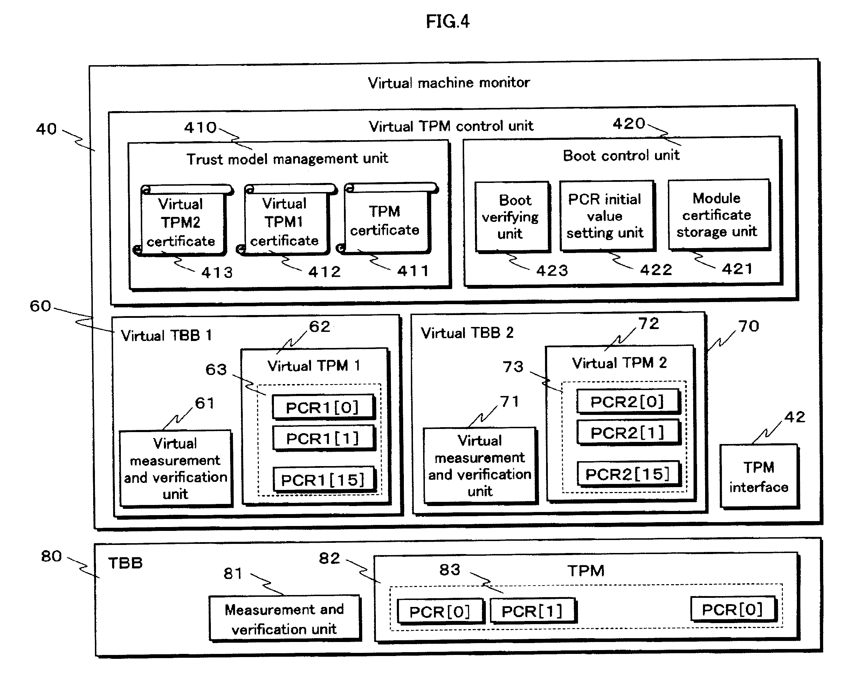

Next, the details of the virtual machine monitor are described with reference to FIG 4. Note that the following description refers only to those components not described with reference to FIG 2.

The virtual TPM control unit 40 is composed of the trust model management unit 410 and the boot control unit 420.

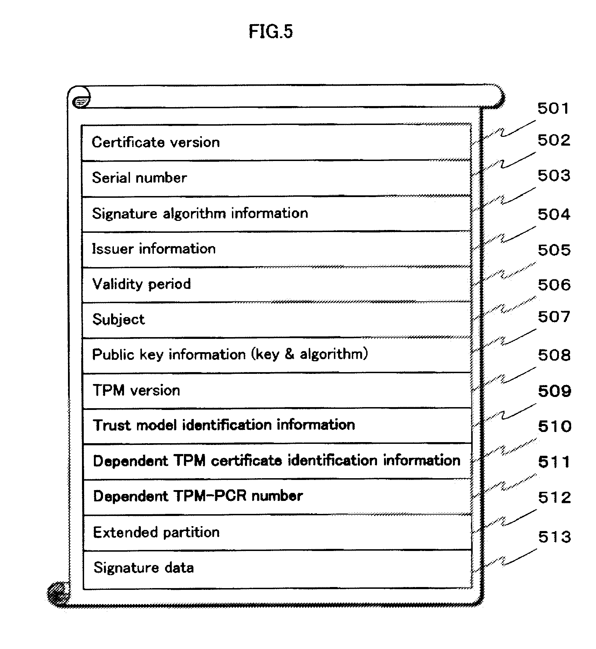

The trust model management unit 410 manages the trust models in the multi-stakeholder model described with reference to FIG 1. More specifically, the trust model management unit 410 manages TPM certificates (411, 412 and 413) which express the three trust models shown in FIG 1. The TPM certificates will be described later with reference to FIG 5. The TPM certificates (411, 412 and 413) are certificates each attached to a TPM. In Embodiment 1, the TPM 82 is attached with a TPM certificate 411, the virtual TPM 1 (62) is attached with a virtual TPM1 certificate 412, and the virtual TPM 2 (72) is attached with a virtual TPM2 certificate 413.

The boot control unit 420 is composed of a module certificate storage unit 421, a boot verifying unit 423, and a PCR initial value setting unit 422.

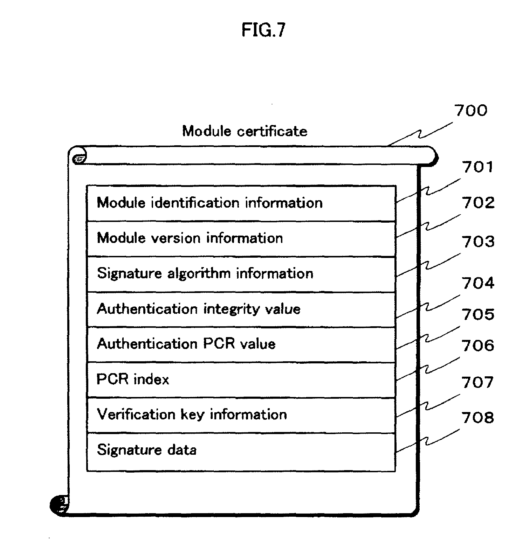

The module certificate storage unit 421 stores module certificates used in the secure boot sequence of each virtual machine to verify that a module being activated has not been tampered with. Each module certificate contains the integrity value for authentication and the chained integrity information for authentication and corresponds to a Reference Integrity Metrics (RIM) of the TCG The details of the module certificates will be described later with reference to FIG 7.

Each of the TPM (82) and virtual TPMs (62 and 63) has a set of 16 PCRs. The PCRs are registers called Platform Configuration Registers and used to store integrity values generated by executing TCG's TPM_Extend commands. Note, in addition, that the number of PCRs is not limited to 16 and may be more or less than 16. In the present embodiment, the number of PCRs provided is equal to or more than the number determined according to the TCG specifications.

The PCR initial value setting unit 422 sets the initial values of the PCRs 83 of the TPM and the PCRs (63 and 73) of the virtual TPMs, based on the TPM certificate and virtual TPM certificates managed by the trust model management unit 410. The TPM and the virtual TPMs are used by the virtual machine monitor and the virtual machines.

The boot verifying unit 423 verifies that the boot sequence of each virtual machine to be activated is progressing while maintaining the trust relationship in compliance with the trust model, based on the TPM certificate or virtual TPM certificate managed by the trust model management unit 410.

### <TPM Certificate Defining Trust Model>

Next, a TPM certificate defining a trust model is described with reference to FIG 5. The format of TPM certificate is common among the TPM certificate 411, the virtual TPM1 certificate 412, and virtual TPM2 certificate 413. More specifically, the X.509 format is used. Each TPM certificate includes a certificate version 501 indicating the X.509 version, a serial number 502 that is a unique value assigned by the issuer of the certificate, signature algorithm information 503 indicating a signature algorithm used for signature verification of the certificate, issuer information 504, the validity period 505 of the certificate, a subject 506 indicating an entity receiving the certificate, public key information 507 indicating a key value and a public key algorithm, a TPM version 508, trust model identification information 509, dependent TPM certificate identification information 510, a dependent TPM-PCR number 511, an extended partition 512, and signature data 513 of these data items.

The extended partition 512 may store a CRL, the manufacturing process such as ISO 90000, and security related information, example of which includes common criteria such as EAL. Additionally, the conditions of function control and the details of the function control may be stored.

In the present embodiment, in order to define a trust model, each certificate contains the trust model identification information 509, the dependent TPM certificate identification information 510, and the dependent TPM-PCR number 511. The following now describes the configuration of these information items.

The trust model identification information 509 is information identifying one of the three trust models, namely independent model, interdependent model and dependent model.

The dependent TPM certificate identification information 510 contains a pointer to a TPM certificate which is in a trust dependency relation in the trust model.

The dependent TPM-PCR number 511 indicates the PCR number of an already activated TPM or virtual TPM in a trust dependency relation in the trust model.

In the present embodiment, each TPM or virtual TPM sets, as the initial value(s) of its own PCRs before starting secure boot, each value held by one or more PCRs specified by the dependent TPM-PCR number 511 out of the PCRs of the TPM or virtual TPM indicated by the dependent TPM certificate identification information 510. Here, the consideration is given to a model in which a virtual machine B depends on a virtual machine A. That is, the virtual machine B needs to be activated after the virtual machine A is activated. In this case, checking the correct activation of the virtual machine B is not sufficient to guarantee whether the virtual machine B is duly activated after the virtual machine A is correctly activated. In view of the above, the values used for verification of the virtual machine A (PCR values) need to be inherited as values used for verification of the virtual machine B in the following manner. This is done by assigning the PCR values of the virtual machine A held upon completion of the module activation to the PCRs of the TPM of the virtual machine B as its initial values. Reversely, the PCR values of the virtual machine B can be inherited from the virtual machine A. During the chaining process of PCR values in secure boot, each time a module is activated, a new value is calculated from the current PCR value and the integrity value of the activated module and the calculated value is stored to the PCR as a new PCR value. That is, by initializing a PCR of the virtual machine B with a corresponding PCR value of the virtual machine A, the initial PCR value of the virtual machine B inherently reflects the PCR value of the virtual machine A. Note that the same applies to the case where the PCR value is inherited from the virtual machine monitor to a virtual machine.

As described above, each TPM has a plurality of PCRs. Each PCR stores the PCR value relevant to a different module. In addition, a function used by each virtual machine, out of the functions of other virtual machines and of the virtual machine monitor, differs depending on the trust model. For this reason, which of PCR values each virtual machine should inherit differs depending on the trust model.

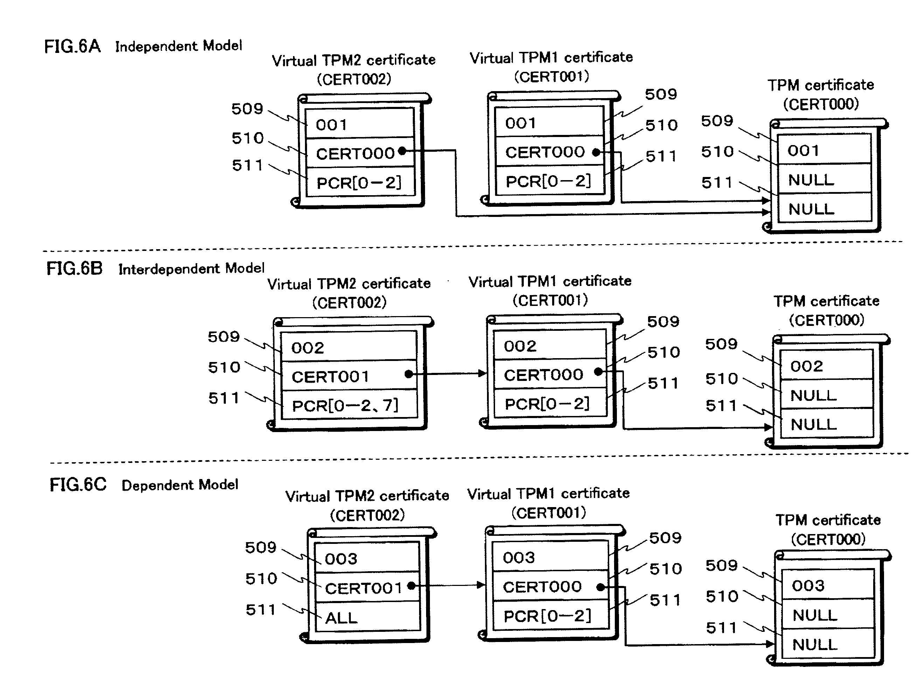

First, in the independent model, each virtual machine depends only on the virtual machine monitor. Therefore, each virtual machine inherits the PCR value(s) indicating the integrity information which is the environmental information of the virtual machine monitor. In the present embodiment, the following description is given with reference to FIGs. 6-8, assuming that the environmental information of the virtual machine monitor is stored in PCRs 0-2.

In the interdependent model, a virtual machine depending on another virtual machine uses only part of the functions of the other virtual machine. Therefore, it is sufficient to inherit the PCR value(s) of the relevant functions.

In the dependent model, a virtual machine depending on another virtual machine uses all the functions of the other virtual machine. Therefore, it is required to inherit the PCR values of all the functions. That is, all the PCR values need to be inherited.

In the present embodiment, the above control is realized by using the trust model identification information 509, the dependent TPM certificate identification information 510 and the dependent TPM-PCR number 511 contained in the TPM certificate. More specific description of how the above-mentioned information items are used will be given below with reference to FIGs. 6-9.

Although described as being a public key certificate, the TPM certificate is not limited to a public key certificate and may alternatively be an attribute certificate. In the case of a public key certificate, the trust model may be expressed by an endorsement key (EK) certificate specified by the TCG. In the case of an attribute certificate, the trust model may be expressed by a platform certificate specified by the TCG.

Note in addition that although the X.509 format is specifically mentioned as the certificate format, this is without limitation. As long as information necessary for a certificate is contained, any other format may be used.

### <Example of TPM Certificate Expressing Trust Model>

FIG 6 is a specific example of a TPM certificate expressing a trust model.

For the convenience sake of description of the present embodiment, the chained integrity value(s) measured at the boot time of the virtual machine monitor is assumed to be stored to the PCR(s) 83 of the TPM 82, the chained integrity value(s) measured at the boot time of the virtual machine 1 (20) is assumed to be stored to the PCR(s) 63 of the virtual TPM 1 (62), and the chained integrity value(s) measured at the boot time of the virtual machine 2 (30) is assumed to be stored to the PCR(s)73 of the virtual TPM 2(72). In addition, the identification information of the TPM certificate is assumed to indicate "CERT000", the identification information of the virtual TPM1 certificate is assumed to indicate "CERT001", and the identification information of the virtual TPM2 certificate is assumed to indicate "CERT002". Although FIG 6 only shows the TPM certificate with information items relevant to the trust model, each TPM certificate actually is in the format described with reference to FIG 5.

FIG 6A shows a specific example of the independent model, In this example, the trust model identification information identifying this independent model holds the value "001". In addition, CERT001 is in trust dependency on CERT000, and CERT002 is in trust dependency on CERT000. This relationship indicates that the virtual machine 1 trusts the virtual machine monitor, and the virtual machine 2 also trusts the virtual machine monitor. In other words, the virtual machines 1 and 2 need to be activated after the virtual machine monitor is activated. In this example, the dependent TPM certificate identification information 510 and the dependent TPM-PCR number 511 both of CERT001 indicate "CERT000 " and "PCR[0-2]", respectively. That is to say, the virtual TPM 1 corresponding to CERT001 depend on the TPM corresponding to CERT000. In addition, prior to activation of the virtual machine 1, the PCR[0], PCR[1], and PCR[2] of the virtual TPM 1 are initialized to the values held by the PCR[0], PCR[1] and PCR[2] of the TPM. Similarly, the values of the respective fields of CERT002 indicates that the virtual TPM 2 corresponding to CERT002 depends on the TPM corresponding to CERT000. In addition, prior to activation of the virtual machine 1, PCR[0], PCR[1], and PCR[2] of the virtual TPM 1 are initialized to the values held by PCR[0], PCR[1] and PCR[2] of the TPM. In this example, in addition, the trust model identification information 511 of CERT001 and CERT002 both indicate "001", which means that the virtual machines 1 and 2 are each in the independent model.

FIG 6B shows a specific example of the interdependent model. In this example, the chained integrity value of the module corresponding to the overlapping portion of the bounds of the stakeholders 1 and 2 in the model shown in FIG 1B (that is, a module of the stakeholder 1 used by the stakeholder 2) is held in PCR[7] of TPM 1. In this example, the trust model identification information identifying this interdependent model holds the value "002". In addition, it is indicted that CERT002 is in trust dependency on CERT001, and CERT001 is in trust dependency on CERT000. This indicates a chain of trust in which the virtual machine 2 trusts the virtual machine 1 and the virtual machine 1 trusts the virtual machine monitor. In other words, the virtual machine 1 needs to be activated after the virtual machine monitor is activated. Then, the virtual machine 2 needs to be activated after the virtual machine 1 is activated. In this example, the dependent TPM certificate identification information 510 and the dependent TPM-PCR number 511 both of CERT002 indicate "CERT000" and "PCR[0-2]", respectively. That is to say, the virtual TPM 1 corresponding to CERT001 depends on the TPM corresponding to CERT000. In addition, prior to activation of the virtual machine 1, the PCR[0], PCR[1], and PCR[2] of the virtual TPM 1 are initialized to the values held by the PCR[0] PCR[1] and PCR[2] of the TPM. In this example, the dependent TPM certificate identification information, 510 and the dependent TPM-PCR number 511 both of CERT002 indicate "CERT001" and "PCR[0-2 and 7]", respectively. That is to say, the virtual TPM 2 corresponding to CERT002 depends on the TPM corresponding to CERT000. In addition, prior to activation of the virtual machine 1, the PCR[0], PCR[1], PCR[2] and PCR[7] of the virtual TPM 1 are initialized to the values held by the PCR[0] PCR[1] PCR[2] and PCR[7] of the TPM. In this example, in addition, the trust model identification information 511 of CERT001 and CERT002 both indicate "002", which means that the virtual machines 1 and 2 are in the interdependent model.

FIG 6C shows a specific example of the dependent model. In this example, the trust model identification information identifying this dependent model holds the value "003". In addition, CERT002 is in trust dependency on CERT001, and CERT001 is in trust dependency on CERT000. This indicates a chain of trust in which the virtual machine 2 trusts the virtual machine 1 and the virtual machine 1 trusts the virtual machine monitor. In other words, the virtual machine 1 needs to be activated after the virtual machine monitor is activated. Then, the virtual machine 2 needs to be activated after the virtual machine 1 is activated. In this example, the dependent TPM certificate identification information 510 and the dependent TPM-PCR number 511 both of CERT002 indicate "CERT000" and "PCR [0-2]", respectively. That is, prior to activation of the virtual machine 1, PCR[0] PCR[1] and PCR[2] of the virtual TPM 1 are initialized to the values held by PCR[0], PCR[1] and PCR[2] of the TPM. In addition, the dependent TPM-PCR number 512 of CERT002 indicates "ALL" since the stakeholder 2 depends on the entire environment of the stakeholder 1. That is, prior to activation of the virtual machine 2, all the PCRs of the virtual TPM 2 (namely, PCR[0], PCR[1], PCR[2] ... and PCR[15]) are initialized to the values held by the respective PCRs of the virtual TPM 1 (namely, PCR[0], PCR[1], PCR[2] ... and PCR[15]). The processing flow of setting the initial PCR values will be described later with reference to FIG 9.

### <Module Certificate>

Next, the module certificate is described. FIG 7 shows a module certificate used in a secure boot sequence. A module certificate 700 is a certificate attached to an individual module targeted for secure boot and includes module identification information 701, module version information 702, signature algorithm information 703 indicating a signature algorithm used to verify this certificate, authentication integrity value 704 indicating the expected integrity value of the module, an authentication PCR value 705 indicating the chained value of expected integrity values held by a PCR, a PCR index 706 indicating the PCR numbers subject for chaining, verification key information 707 identifying a verification key used for verifying the module certificate itself, and signature data 708 used to verify the integrity of the certificate itself. The module certificate 700 may be implemented by using Reference Integrity Metrics (RIM) certificated specified by the TCG

### <Overview of Secure Boot based on Trust Model>

Next, the following describes the overall sequence of secure boot in a multi-stakeholder environment based on the trust model, with reference to FIG 8.

First, when power is turned on, the measurement and verification unit 81 of the TBB 80 shown in FIG 2 activates and starts signature verification of the TPM certificate 411. More specifically, the measurement and verification unit 81 performs the signature verification with the use of the signature data 513 and the verification key stored in advance, so that whether or not the TPM certificate has been tampered with is confirmed (StepS801). Note that the signature verification on the TPM certificate and module certificate described below is performed in a similar manner.

Next, the PCRs of the TPM are initialized based on the dependent TPM certificate identification information 510 and the dependent TPM-PCR number 511 of the TPM certificate 411. If the dependent TPM certificate information and dependent TPM-PCR number indicate NULL, the PCRs 83 of the TPM 80 are all initialized to zero (Step S802).

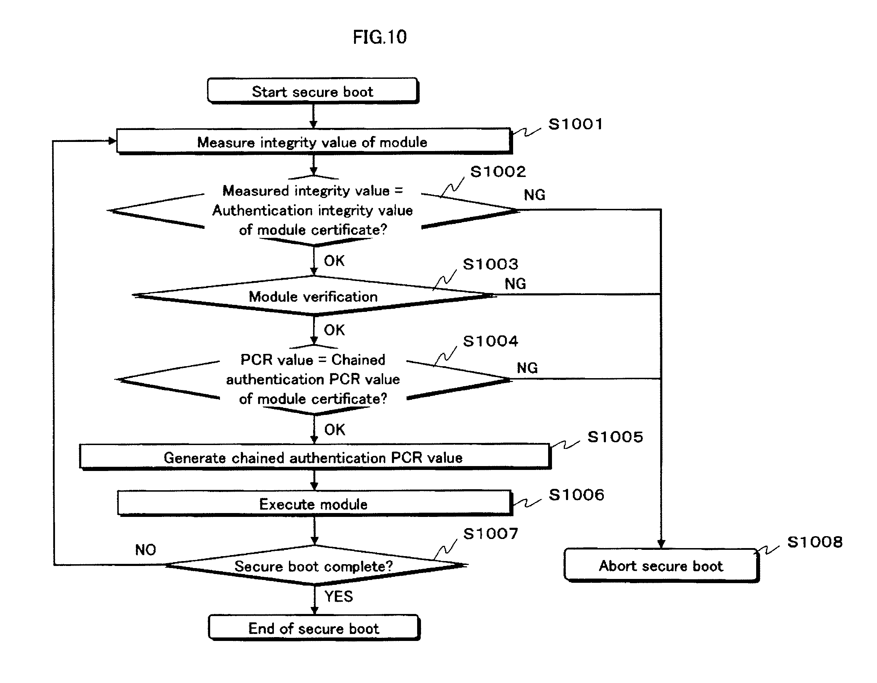

Next, the environment of the virtual machine monitor is securely boot (Step S803). The detailed steps of the secure boot sequence will be described later with reference to FIG 10.

Next, the boot verifying unit 423 included in the boot control unit 420 which in turn is included in the virtual TPM control unit refers to an appropriate virtual TPM certificate managed by the trust model management unit 410 to perform signature verification on the virtual TPM certificate corresponding to the virtual machine to be activated next (Step S804). The virtual machine to be activated next is specified with reference to the trust model identification information 509, which indicates the trust relationship relevant to the TPM certificate, and the dependent TPM certificate identification information 510. If the signature verification performed in Step S804 on the virtual TPM certificate corresponding to the virtual machine to be executed next fails (Step S804: NG), the boot sequence is aborted (Step S808). On the other hand, if the signature verification performed in Step S805 on the virtual TPM certificate is successful (Step S805: OK), the processing moves to Step S805.

Next, based on the dependent TPM certificate identification information 510 and the dependent TPM-PCR number 512 of the virtual TPM certificate verified in Step S804, the PCR initial value setting unit 422 of the boot control unit 420 included in the virtual TPM control unit sets the initial values of the PCRs of the virtual TPM corresponding to the verified virtual TPM certificate (Step S805). The detailed processing flow of setting the PCR initial values is described with reference to FIG. 9.

Next, the virtual machine corresponding to the virtual TPM certificate verified in Step S804 is securely boot (Step S806).

Next, it is checked whether or not all the virtual machines have been securely boot (Step S809). Completion of secure boot of all the virtual machines can be checked by the boot verifying unit with the use of flag, for example.

### <PCR Setting Process Using TPM Certificate>

The following now describes the processing flow of setting PCRs of the TPM and virtual TPM performed in Steps S802 and S805 shown in FIG. 8.

First, the PCR initial value setting unit 422 refers to the trust model identification information 509 of the TPM certificate or virtual TPM certificate and stores the value of the identification information as TRUST_MODEL (Step S901). The TRUST_MODEL may be a specific register or a temporary variable on RAM. Any implementation is sufficient as long as the TRUST_MODEL is retained during the secure boot sequence not in a non-volatile manner.
Next, the PCR initial value setting unit 422 refers to the dependent TPM identification information 510 of the certificate that is referred to in Step S901 (Step S902). If the dependent TPM identification information 510 indicates "NULL", it means that the certificate trusts no other entity and thus the certificate is the root of trust. In every trust model according to Embodiment 1, all the virtual machines run on the virtual machine monitor. Therefore the dependent TPM identification information 510 of the TPM certificate corresponding to the TPM of the virtual machine monitor layer indicates NULL. That is, if it is known as a result of Step S902 that NULL is indicated, the PCR initial value setting unit 422 recognizes that the certificate is the TPM certificate and the environment to be activated is the virtual machine monitor (Step S903). On the other hand, if it is known as a result of Step S902 that NULL is not indicated, the PCR initial value setting unit 422 recognizes that the certificate is a virtual TPM certificate assigned to a virtual TPM used by a virtual machine and that the environment to be activated is a virtual machine (Step S906).

Next, in Step S903, the PCR initial value setting unit 422 checks the dependent TPM-PCR number 511 to set the initial PCR values of the TPM before activation of the virtual machine monitor environment (Step S904). If it is checked in Step S904 that the dependent TPM-PCR number 511 is "NULL", the PCR initial value setting unit 422 initializes all the PCRs of the TPM to "0" (Step S905). If it is checked in Step S904 that the dependent TPM-PCR number 511 does not indicate "NULL", then an error processing is performed (Step S913) for the following reason. That is, a correct TPM certificate does not depend on any other entity as the source of trust and thus no dependent TPM-PCR number is set. If any value is set, there is a contradiction in the contents of the certificate and thus results in error.

Next, Step S906 and the following steps are described.

In S906, the PCR initial value setting unit 422 checks the dependency relation of the virtual TPM certificate corresponding to the virtual machine to be activated. Then, it is judged with reference to the dependent TPM identification information whether the certificate being checked depends on the TPM certificate or a virtual TPM certificate (Step S907). If it is judged in Step S907 that the dependent TPM identification information indicates the TPM certificate, Step S908 is performed next. On the other hand, if it is judged in Step S907 that the dependent TPM identification information indicates a virtual TPM certificate, Step S912 is performed next.

Next, the dependent TPM-PCR number 511 is checked (Step S908). If it is checked in Step S908 the dependent TPM-PCR number 511 indicates "NULL", the PCRs of the virtual TPM are all initialized to "0" (Step S909). If it is checked in Step S908 that the dependent TPM-PCR number 511 indicates specific PCR number(s), the PCR initial value setting unit 422 checks the value of each PCR indicated by the dependent TPM-PCR number 511 and initializes a corresponding PCR of the virtual TPM to the checked PCR value (Step S910). If it is checked in Step S908 that the dependent TPM-PCR number 511 indicates "ALL", the PCR initial value setting unit 422 refer to all the PCRs of the TPM and initializes the PCRs of the virtual TPM to the respective PCR values of the TPM (Step S911).

The following now describes the flow of Step S912 and the following steps, which is performed if it is judged in S907 that the dependent TPM identification information indicates a TPM certificate. In Step S912, the dependent TPM-PCR number 511 contained in the certificate is checked in a manner similar to Steps S904 and S908 (Step S912). If it is checked in Step S912 that the dependent TPM-PCR number 511 indicates "NULL", then an error processing is performed (Step S913) for the following reason. That is, the currently checked certificate is judged in Step S907 as being dependent on a virtual TPM certificate. Therefore, if the dependent TPM-PCR number indicates "NULL", there is a contradiction in the contents of the certificate.

On the other hand, if it is judged in Step S912 that the dependent TPM-PCR number 511 indicates specific PCR number(s), it is then checked whether the trust model set in Step S901 is the interdependent model (Step S914). If the judgment in Step S914 results in "YES" (i.e., the trust model identification information 509 indicates the interdependent model), the PCR initial value setting unit 422 refers to the value held by each PCR indicated by the dependent TPM-PCR number 511 out of the PCRs of the virtual TPM on which the currently processed certificate depends, and initializes corresponding PCRs of the currently processed virtual TPM to the referenced PCR values (Step S915). If the judgment in Step S914 results in "NO" (i.e., the trust model identification information 509 does not indicate the interdependent model), the error process is performed (Step S912) for the following reason. That is, since specific PCR number(s) are depended upon, the trust model identification information should be the interdependent model, otherwise there is a contradiction in the contents of the certificate.

On the other hand, if it is judged in Step S912 that the dependent TPM-PCR number 511 indicates "ALL", it is then checked whether the trust model set in Step S901 is the dependent model (Step S916). If the judgment in Step S916 results in "YES" (i.e., the trust model identification information 509 indicates the dependent model), the PCR initial value setting unit 422 refer to all the PCR values of the virtual TPM on which the currently processed virtual TPM depends and initializes all the PCR values of the currently processed virtual TPM to the referenced values (Step S915). If the judgment in Step S914 results in "NO" (i.e., the trust model identification information 509 does not indicate the dependent model), the error process is performed (Step S912) for the following reason. That is, since all the PCR numbers are depended on, the trust model identification information should be the dependent model, otherwise there is a contradiction in the contents of the certificate.

Note that one example of the error processing performed in Step S913 shown in FIG 9 is to abort the boot sequence. In another example of the error processing, the information processing terminal is continued to be activated without being aborted but enabled to execute only limited functions. In the case of a mobile phone, for example, one option of error processing to activate the mobile phone so as to enable to make emergency calls only.

### <Details of Secure Boot Sequence>

FIG 10 is a flowchart showing the details of the secure boot sequence performed in Steps S803 and S806 shown in FIG 8. The secure boot sequence is a scheme that is basically similar to the secure boot sequence disclosed by Non-Patent Literature 4 by the TCG According to Embodiment 1, however, the initial values set to the PCRs of the TPM and virtual TPM at the time of activating the virtual machine monitor and each virtual machine are different as shown in FIGs. 7 and 8. According to Non-Patent Literature 4, the initial PCR values of the TPM or virtual TPM are always "0". In contrast, according to the present embodiment, there area cases where an initial value other than "0" is set, depending on the trust model. With the configuration as above, the present embodiment ensures that the integrity value information is chained between the virtual machine monitor and a virtual machine as well as between virtual machines, which is a point different from Non-Patent Literature 4.

With reference to FIG 10, the following now describes the flow of secure boot sequence according to the present embodiment

First, the integrity value of the module to be activated first is measured (Step S1001). For example, in the case of the secure boot sequence of a virtual machine monitor performed in Step S803, the measurement and verification unit 81 of the TBB 80 activates first and measures the integrity value of the virtual machine monitor 40. On the other hand, in the case of the "secure boot of a virtual machine" performed in Step S806, the measurement and verification unit of the virtual TBB activates first and verifies the OS loader.

Next, the integrity value measured in Step S1001 is compared with the authentication integrity value 704 indicated in the module certificate as described with reference to FIG 8, to see if the two integrity values match (Step S1002). If it is found in Step S1002 that the two integrity values disagree (Step S1002: NG), Step S1008 is performed to abort the secure boot On the other hand, if it is found in Step S1002 that the two integrity values match (S1002: OK), Step S903 is performed next.

Next, the signature verification is performed on the module certificate (Step S1003). If the signature verification fails (Step S1003: NG), S1008 is performed to abort the secure boot.
On the other hand, if the signature verification is successfully performed (Step S1003: OK), Step S1004 is performed next. The process of signature verification is performed with the use of a key corresponding to the verification key identification information 707 indicated in the module certificate.

Next, the PCR value(s) of the TPM or virtual TPM is compared with the authentication PCR value(s) 705 indicated in the module certificate to see if they match (Step S1004). For example, in the case of the "secure boot sequence of the virtual machine monitor" performed in Step S803, the PCR value(s) of the TPM are compared with the authentication PCR value(s) 705 indicated in the module certificate to see if they match. On the other hand, in the case of the "secure boot of a virtual machine" performed in Step S806, the PCR value(s) of the virtual TPM are compared with the authentication PCR value(s) 705 indicated in the module certificate 700 to see if they match. If it is judged in Step S 1004 that the PCR values do not match (Step S 1004: NG), Step S908 is performed to abort the secure boot. On the other hand, if it is judged in Step S1004 that the PCR values match (Step S1004; OK), Step S905 is performed next.

Next, the chaining process is performed using each authentication integrity value 704 indicated in the module certificate 700 and the value held by a corresponding PCR specified by the PCR index 706 and overwrites the value held by that PCR with the chained value (Step S 1005).

Next, the module verified through Steps S 1001 and S 1002 is executed (Step S1006).

Next, it is checked whether the secure boot sequence has all completed or not (Step S1007). If the secure boot sequence has not completed yet and there still is a module to be activated, Step S1001 is performed to continue the secure boot sequence. If all the modules targeted for the secure boot have been verified and executed, then the secure boot sequence ends.

Note that the modules targeted for the secure boot of the virtual machine may include the OS loader, guest OS and application. Alternatively, the application may be excluded and the secure boot may be performed up to the guest OS environment.

### (Embodiment 2)

Embodiment 2 of the present invention is directed to a model in which the terminal environmental information is passed to an external server connected via a network and the terminal environment is verified remotely on the server. This verification model is based on the Attestation function specified by the TCG Yet, the model described in the present embodiment enables the server-side verification as to whether a terminal in a multi-stakeholder model is being activated in an expected trust model. The conventional Attestation function is not cable of such verification.

### <Outline of Attestation Process>

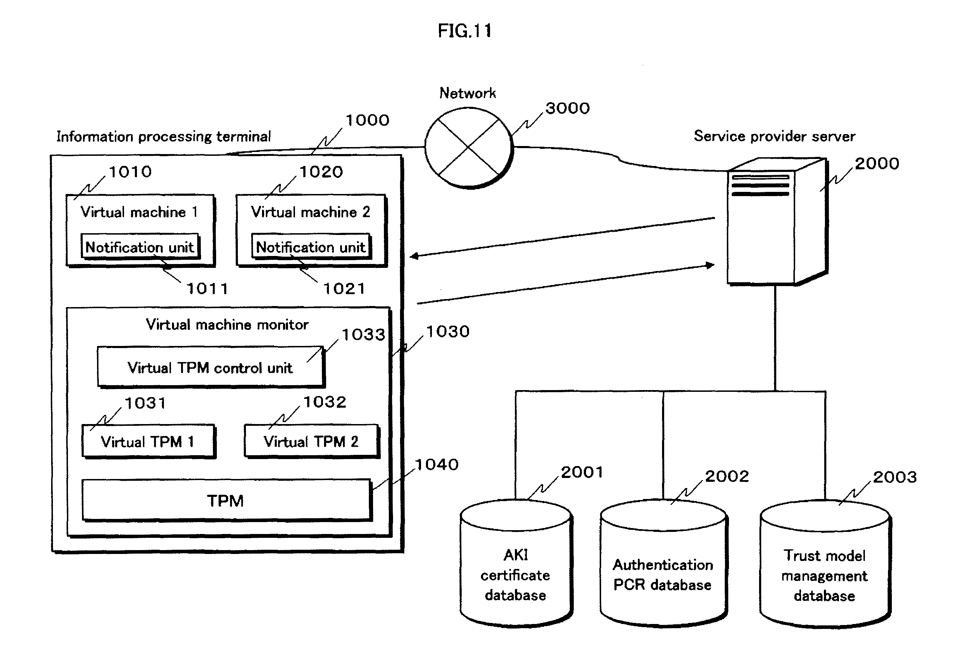

FIG. 11 shows an information processing terminal 1000 that is basically similar in configuration to the information processing terminal consistent with Embodiment 1. Yet, the difference is found in that the information processing terminal 1000 is able to transmit terminal environmental information to an external service provider server 2000 via a network 3000 . More specifically, in the information processing terminal 1000, the virtual machine 1 (1010) and the virtual machine 2 (1020) each has a notification unit (1011 or 1021). In addition, the virtual TPM 1 (1031) and the virtual TPM 2 (1032) generate signature data in response to a request for Attestation process received from the external service provider server 2000. More specifically, each virtual TPM generates signature from the PCR values of the TPM, with the use of an Attestation Identity Key (AIK), which is not illustrated in the figures. The AIK is a key pair according to public key cryptography and the secret key of the key pair is securely retained in the information processing terminal, whereas the public key paired with the secret key is stored in the external service server. The authenticity of the AIK public key is verified with the use of the public key certificate (AIK certificate) issued by the CA (Certification Authority). The process of issuing a certificate and the key verification method using a public key certificate are according to Public Key Infrastructure (PKI), which is publicly well-known. Thus, description of such is omitted here.

### <Attestation Sequence>

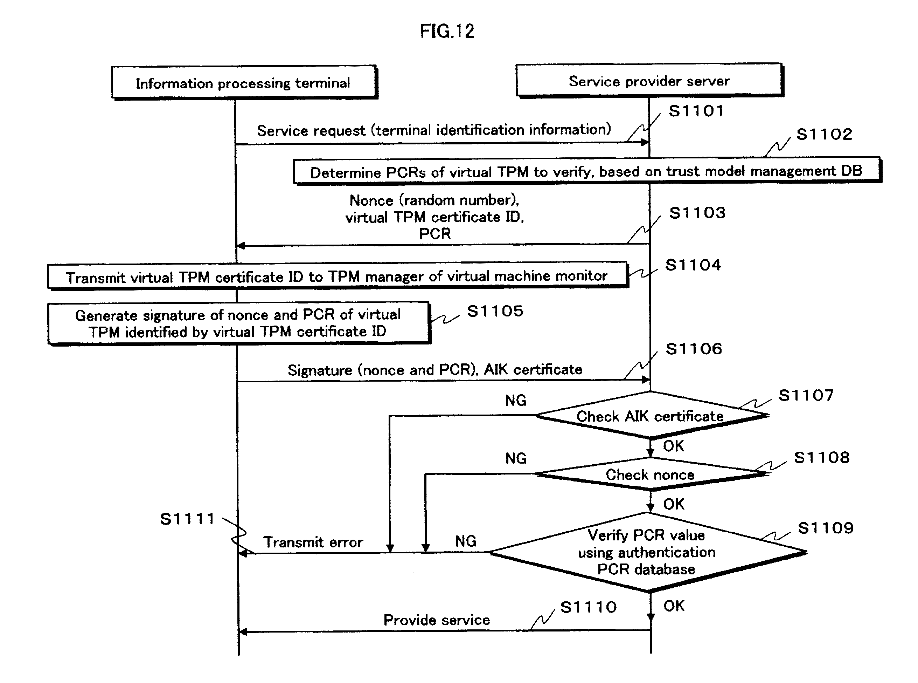

Next, the Attestation sequence according to Embodiment 2 is described with reference to FIG 12. The sequence shown in FIG 12 is described by way of example in which the information processing terminal requests a service to the external service provider server and the service provider server provides the service after verifying the authenticity of the information processing terminal by using the Attestation function.

First, the information processing terminal sends a request for a service to the service provider server, along with the terminal identification information identifying the information processing terminal (Step S1101).

Next, the service provider server accesses the trust model management database to refer to the TPM certificate and virtual TPM certificate(s) that correspond to the terminal identification information and judges the trust model of the information processing terminal. The service provider server then determines the PCR number(s) to verify, based on the trust model. For example, in the case of verifying the trust model between the virtual machine monitor and virtual machine 1 shown in FIG 6C, the service provider server specifies CERT001, which is indicated by the TPM certificate identification information of the virtual machine 1, the identification information, and the PCR numbers 0, 1 and 2 (Step S1102).

Next, the service provider server generates a nonce (random number) and transmits the virtual TPM certificate ID and the PCR number(s) specified in Step S 1102 to the information processing terminal (Step S1103).

Neat, the virtual machine that has issued the service request receives the information sent in S1103 and passes the received information to the virtual TPM control unit 1033 of the virtual machine monitor 1030 (Step S1104).

Based on the information received in Step S 1104, the virtual TPM control unit requests the virtual TPM to generate a signature from the nonce and the specified PCR value(s), so that the virtual TPM generates a signature from the values held in the specified PCR value(s) and the nonce with the use of the AIK secret key (Step S1105). In the signature generation performed in Step S1105, the TPM Quote command or TPM_Quote2 command specified by the TCG is used.

Next, the information processing terminal uses the notification unit to transmit the signature data, the nonce, and the PCR value(s) along with the AIK certificate to the service provider server (Step S1106).

Next, the service provider server checks the authenticity of the AIK certificate (Step S1107). Since the AIK certificate is issued by the CA (Certificate Authority), CA's public key is used to verify the certificate. If the verification performed in Step S1107 fails (Step SS1107: NG), the service provider server transmits an error to the information processing terminal (Step S1111). On the other hand, if the verification performed in Step S1107 is successful (Step S1107: OK), Step S1108 is performed next.

Next, the nonce data is verified. First, the service provider server checks if the received nonce matches the nonce specified by the service provider server (Step S1108). If the check performed in Step S1108 fails (Step S1108: NG), the service provider server transmits an error to the information processing terminal (Step S1111). On the other hand, if the verification performed in Step S1108 is successful (Step S1108: OK), Step S1109 is performed next.

Next, the service provider server accesses an authentication PCR database 2002 to compare the authentication PCR value(s) corresponding to the identification information of the virtual TPM certificate determined in Step S 1103 with the PCR value(s) transmitted from the information processing terminal to verify the authenticity of the information processing terminal (Step S1109). If the verification performed in Step S1109 fails (Step S1109: NG), the service provider server transmits an error (Step S1111). On the other hand, if the verification performed in Step S1109 is successful (Step S1109: OK), that is, if the respective PCRs match, the service provider server is assured of the proper activation of the information processing terminal in the virtual machine environment specified by the service provider server in compliance with the trust model. Consequently, the service provider server provides the requested service to the information processing terminal.

With the above processing, the service provider server is enabled to provide services only to information processing terminals having been verified their authenticity. In addition, the conventional technique cannot enable the service provider server to judge whether a terminal having requested a service is running on the virtual machine monitor or not. According to the present embodiment, however, the trust model management database stores the TPM certificate and virtual TPM certificates each defining a trust model, so that the machine operating on the virtual machine monitor is distinguished. In addition, even in the case of a multi-stakeholder terminal in which one virtual machine depends on another virtual machine, by making reference to certificates stored in the trust model management database, the service provider server can duly identify the trust model of the terminal and judge whether each virtual machine is being activated in compliance with the expected trust model. As a consequence, the service provider is enabled to more flexibly verify the environments in the information processing terminal.

This concludes the description of Embodiment 2.

It should be noted that although the verification Steps S1107-S1109 performed by the service provider server have been described, these are described merely by way of example and without limitation. In one alternative example, the following is possible. That is, an authentication hash value is generated from the authentication PCR value(s) stored in the authentication PCR database and the nonce information transmitted in Step S 1103. In addition, the signature data received in Step S1106 is decrypted using the public key indicated in the AIK certificate to obtain a decrypted hash value. Then, the decrypted hash value is compared with the authentication hash value to see if they match.

### (Embodiment 3)

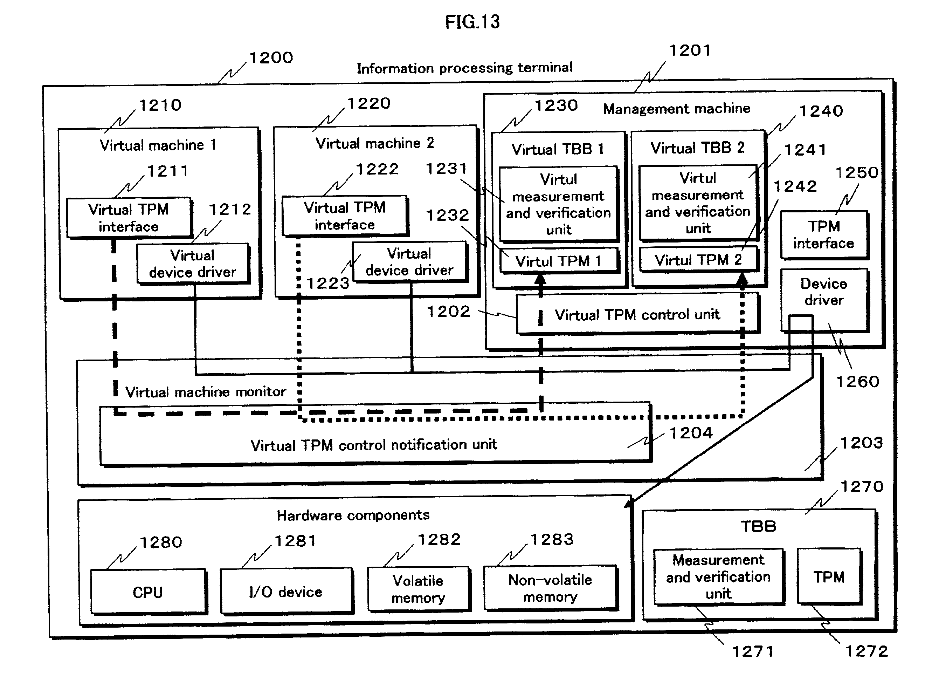

An information processing terminal 1200 according to Embodiment 3 of the present invention further includes a machine environment for management (management machine 1201), in addition to the virtual machines according to Embodiments 1 and 2. FIG 13 is a view showing the overall configuration of the information processing terminal 1200 having a management machine. Embodiment 3 greatly differs from Embodiments 1 and 2 in that a virtual TPM control unit 1202 and virtual trusted building blocks 1230 and 1240 are provided within the management machine 1201 instead of within the virtual machine monitor, and that the virtual machine monitor 1203 newly includes a virtual TPM control notification unit 1204. No description is given of the components realizing the same functions as those described in Embodiments 1 and 2. The following only describes the components having functions specific to Embodiment.

The virtual TPM control notification unit 1204 receives a process request for a virtual TPM from one of the virtual machines (1211 and 1220) via the TPM interface (1211 or 1222) and notifies the virtual TPM control unit 1202 of the management machine 1201 about the received virtual TPM process request.

In response to the virtual TPM process request notified from the virtual TPM control notification unit 1204, the virtual TPM control unit 1202 issues a process request to the virtual TPM residing in an appropriate virtual TBB. In the example shown in FIG 13, in response to a virtual TPM process request from the virtual machine 1210, a process request is issued to the virtual TPM 1 (1232). Similarly, in response to a virtual TPM process request from the virtual machine 1220, a process request is issued to the virtual TPM 2 (1242).

The result of a process performed by the virtual TPM in response to the virtual TPM process request issued form the virtual TPM is retuned from the virtual TPM control unit 1202 to the virtual machine having issued the request, via the virtual TPM control notification unit. In the example shown in FIG 11, the result of a process performed by the virtual TPM 1 (1232) is returned to the virtual machine 1 (1210), whereas the result of a process performed by the virtual TPM 2 (1242) is returned to the virtual machine 2 (1220)

In addition, when a virtual machine issues a process request to a device, a corresponding virtual device driver (1212 or 1223) issues an appropriate request to the device driver 1260 of the management machine 1201 via the virtual machine monitor 1203, so that the device driver1260 conducts a necessary process to the device. The result of a process performed by the device is returned in a flow reverse to the process request to the device and thus no detailed description is given here.

According to Embodiment 3, the management machine performs a secure process with the use of a TPM 1272. Therefore, the integrity value, which serves as the environmental information of the management machine, is stored in the TPM 1272. In this case, the integrity values of the virtual machine monitor and the management machine are chained and the chained value is stored to the TPM 1272. Although not shown in FIG 13, the TPM certificate is attached to the TPM 1272 used by the virtual machine monitor and the management machine. With this arrangement, each virtual machine is placed into trust dependency not only on the virtual machine monitor but also on the management machine. The secure boot performed with the use of this TPM certificate ensures that the integrity values of the virtual machine monitor, management machine and virtual machine are all chained, rather than the integrity value solely of the virtual machine monitor, and the chained value is stored to appropriate PCR(s) of the virtual TPM. In this way, the information processing terminal is activated by sequentially verifying the authenticity of each virtual machine environment and management machine.

In addition, in order to perform the Attestation process as described in Embodiment 2, a virtual machine transmits, to the service provider server via a notification unit (not shown in FIG 13) of the virtual machine, a value obtained by chaining the environmental information of the virtual machine and the integrity values of virtual machine monitor and management machine. As a result, the external service provider server is enabled to remotely verify the authenticity of the entire environmental information of the information processing terminal.

Note that the virtual machine may be without any notification unit. Instead, a notification unit may be provided within the management machine. With this arrangement, if the result of Attestation process returned form the external service provider server shows that a virtual machine is not valid, the management machine can suspend the virtual machine or restrict the functions of the virtual machine.

This concludes the description of Embodiment 3.

Note that the chaining of the integrity values may be closed within each machine, instead of chaining between virtual machines, between a virtual machine and the virtual machine monitor, and between a virtual machine and the management machine. In this case, what is controlled according to the TPM certificate will only be the order of activation. As a consequence of the above arrangement, the environmental information of each machine is separately stored to the PeR(s) of a corresponding TPM, so that the individual machine environments can be separately verified.

Further, each TPM may be configured to have two set of PCRs. In this case, one set of PCRs is used to store integrity information obtained by chaining pieces of environmental information that is in dependency relation, and the other set of PCRs is used to store its own integrity information which is not chained to any other environmental. In addition, the module certificate is also modified to have two areas for storing authentication PCR values. One of the areas is used to store authentication PCR value(s) of the integrity information obtained by chaining pieces of environmental information in dependency relation, and the other area is used to store the authentication PCR value(s) of its own integrity information and not chained to any other environmental information. With the above modification, the authenticity of environmental information of the individual machines within the information processing terminal can be verified separately on a machine-by-machine basis as well as integrally on the basis of the entire environment, which provide more flexibility in verifications during the secure boot sequence and the Attestation process.

### (Other Modifications)

The present invention has been described by way of the embodiments. However, it should be naturally appreciated the present invention is not limited to the specific embodiments described above. Various other modifications including the following still falls within the scope of the present invention.

(1) Each device mentioned above specifically is a computer system composed of a microprocessor, ROM, RAM, hard disc unit, display unit, keyboard, mouse and possible one or more other components. The RAM or hard disc unit stores a computer program. Each device fulfills its functionality by the microprocessor operating according to the computer program. Note that each computer program mentioned above is a set of computer instruction codes combined to execute a predetermined function. In addition, each device is not required all of microprocessor, ROM, RAM, hard disc unit, display unit, keyboard, mouse and possibly other components. Rather, each device may include only some of the components mentioned above.

(2) Some or all components constituting each device may be implemented in a single system LSI (Large Scale Integration). The system LSI is a large scale integrated circuit manufactured by fabricating multiple modules on a single chip and specifically is a computer system composed of a microprocessor, ROM, RAM, and possibly other components. The RAM stores a computer program. The microprocessor operates in accordance with the computer program, so that the system LS1 carries out its functionality.

Some or all components of each device described above may be implemented in separate chips or in a single chip.

Although a system LSI is specifically mentioned above, it may be referred to as IC, LSI, super LSI, or ultra LSI, depending on the packaging density. In addition, the scheme employed to realize an integrated circuit is not limited to LSI and such an integrated circuit may be realized by a dedicated circuit or by a general-purpose processor. For example, it is applicable to use an FPGA (Field Programmable Gate Array) that enables post-manufacturing programming of an LSI circuit or a reconfigurable processor that allows reconfiguration of connection between circuit cells within an LSI circuit and their settings.

When any new circuit integration technology becomes available or derived as the semiconductor technology advances, such new technology may be employed to integrate the functional blocks. One possible candidate of such new technology may be achieved by adapting biotechnology.

(3) Some or all component units of each device described above may be implemented in an IC card that may be attached to or detached from the device or in a single module. The IC card or module is a computer system composed of a microprocessor, ROM, RAM, and possibly other components. The IC card or module may include the super multifunctional LSI circuit mentioned above. The microprocessor operates in accordance with a computer program stored on the RAM, so that the IC card or module carries out its functionally. In addition, the IC card or module may be made tamper-resistant.

(4) The present invention may be embodied as any of the methods described above. Furthermore, the present invention may be embodied as a computer program for causing a computer to execute such a method or a digital signal representing such a computer program.

Still further, the present invention may be embodied as a computer-readable recording medium storing the computer program or digital signal mentioned above. Examples of compute-readable recording media include a flexible disk, hard disk, CD-ROM, MO, DVD, DVD-ROM, DVD-RAM, BD (Blu-ray Disc), and semiconductor memory. Still further, the present invention may be embodied as the digital signal per se stored on such a recording medium.

Still further, the present invention may be embodied as the computer program or digital signal that is transmitted via a telecommunication network, a wireless or wired communication network, a network typified by the Internee or data broadcasting.

Still further, the present invention may be embodied as a computer system having a microprocessor and memory. The memory stores the computer program mentioned above and the microprocessor operates in accordance with the computer program.

Still further, the program or digital signal mentioned above may be transferred in form of a recording medium mentioned above or via a network mentioned above, so that the program or digital signal may be executed by another independent computer system.

(5) According to one aspect of the present invention, an information processing device includes: a plurality of virtual machines in one-to-one correspondence with a plurality of stakeholders; a plurality of tamper-resistant modules in one-to-one correspondence with the plurality of virtual machines; and a management unit operable to manage processes performed between the plurality of virtual machines and the plurality of tamper-resistant modules. Each of the plurality of virtual machines has a certificate having dependency relation with one or more other virtual machines.

With the configuration stated above, the dependency relations between the plurality of virtual machines are managed with the use of the certificates. Consequently, it is guaranteed that each dependency relation has not been tampered with, which in turn is effective to guarantee that the plurality of virtual machines run properly in compliance with the dependency relation.

Further, according to another aspect of the present invention, the plurality of virtual machines in the information processing device activate in the order determined according to the dependency relation between the certificates of the virtual machines.

With the configuration stated above, each of the plurality of virtual machines activates with reference to a corresponding certificate proving the dependency relation with one or more other virtual machines, so that the virtual machines are activated in the order determined according to the certificates. Consequently, it is guaranteed that the virtual machines are activated in a mutually related manner in a desired order determined in advance.

Further, according to another aspect of the present invention, the plurality of virtual machines in the information processing device activate in the order determined according to the dependency relation between the certificates of the respective virtual machines. Here, one of the tamper-resistant modules that stores the ultimate verification value obtained through activating all the virtual machines in the determined order verifies the entire authenticity of the plurality of the virtual machines based on the ultimate verification value.

With the configuration stated above, each of the plurality of virtual machines activates with reference to a corresponding certificate proving the dependency relation with one or more other virtual machines, so that the virtual machines are activated in the order determined according to the certificates. Consequently, the ultimate verification value is obtained as a result of chaining the verification values of the mutually related virtual machines. Thus, it is avoided that the plurality of virtual machines separately activate on a stakeholder-by-stakeholder basis, without chaining the activation sequence.

Further, the plurality of stakeholders of the information processing device is in one of a first stakeholder model, a second stakeholder model, and a third stakeholder model. In the first stakeholder model, each stakeholder only uses a tamper-resistant module corresponding to that stakeholder. In the second stakeholder model, a specific stakeholder uses a tamper-resistant module corresponding to the specific stakeholder and also uses a region of a tamper-resistant module corresponding to another stakeholder. In the third stakeholder model, a specific stakeholder uses a tamper-resistant module corresponding to the specific stakeholder and also uses the entire region of a tamper-resistant module corresponding to another stakeholder Each virtual machine refers to a certificate expressing the stakeholder model of the stakeholder corresponding to the virtual machine and having a dependency relation with one or more other virtual machines. With the use of the certificates, the virtual machines activate in the order determined according to the certificates.

With the configuration stated above, each of the plurality of virtual machines activates with reference to a corresponding certificate, which proves the dependency relation with one or more other virtual machines, so that the virtual machines activate in the order determined according to the certificates. Consequently, the ultimate verification value is obtained as a result of chaining the verification values of the mutually related virtual machines. Thus, it is avoided that the plurality of virtual machines separately activate on a stakeholder-by-stakeholder basis, without chaining the activation sequence.

In addition, since the virtual machines activate in the order determined according to the dependency relation between the certificates each showing the stakeholder model of a corresponding stakeholder, it is ensured that each virtual machine is operating in compliance with the corresponding stakeholder model. That is, it is reliably confirmed that the virtual machines are running in compliance with the proper stakeholder models.

Further, in the information processing device, each certificate of a specific virtual machine indicates the stake model type, a pointer indicating another virtual machine chained with the specific virtual machine, and one or more PCR numbers each indicating a register in a tamper-resistant module corresponding to the other virtual machine chained with the specific virtual machine.

Further, each virtual machine in the information processing device identifies the stakeholder model of the virtual machine based on a corresponding certificate. In that case, if the pointer in the corresponding certificate indicates that the stakeholder model is either the second or third stakeholder model, the virtual machine then refers to the PCR number(s) to identify whether the stakeholder model is the second or third stakeholder model.

With the configuration stated above, in the secure boot sequence performed with reference to the certificates, the following is achieved. Since the second and third stakeholder models has a common aspect that a tamper-resistant module of another stakeholder is used, the pointer in a certificate may show the possibility of both the second and third stakeholder models. Even in that case, each virtual machine can duly identify whether a corresponding stakeholder is the second or third stakeholder model based on the PCR number(s) indicated in the certificate. In this way, each virtual machine is prevented from making error in identifying the stakeholder model, with the simple configuration.

Further, each virtual machine in the information processing device judges that the stakeholder model of the corresponding virtual machine is the second stakeholder model, if the PCR number(s) indicates an area rather than the entire area of the register in the tamper-resistant module of another virtual machine chained with the virtual machine.

Further, in the information processing device, the area of the register in the tamper-resistant module of the other virtual machine that is chained with the corresponding virtual machine is used by both the virtual machines.

Further, each virtual machine in the information processing device judges that the stakeholder model of the corresponding virtual machine is the third stakeholder model, if the PCR number(s) indicates the entire area of the register in the tamper-resistant module of another virtual machine chained with the virtual machine.

Further, in the information processing device, in response to an Attestation request from an external server, the management unit transmits to the server the ultimate verification value obtained though activating the virtual machines in the order determined according to the dependency relation between the certificate.

With this configuration stated above, the server that provides services is enabled to reliably verify that the virtual machines in the information processing device operate in compliance with the correct stakeholder model.

Further, in the information processing device, each of the plurality of virtual machines performs a predetermined arithmetic operation for verification at the boot time, so that any tampering with the virtual machine is checked.

Further, in the information processing device, each of the plurality of virtual machines performs the predetermined arithmetic operation for verification, by chaining the verification value of the virtual machine with the variation value obtained as a result of the variation of the management unit, so that any tampering with the virtual machine is checked.

With the configuration stated above, the verification value of each of the plurality of virtual machines is chained with the verification value obtained by the verification of the management unit, so that each arithmetic operation for verification reflects the verification value of the management unit. As a consequence, it is confirmed whether that the plurality of virtual machines operate via the correct management unit

Further, in the information processing device, from among of the tamper-resistant modules corresponding to the virtual machines, one of the tamper-resistant module having the ultimate verification value obtained as a result of the secure boot sequence retains that verification value therein.

Further, in the information processing device, the tamper-resistant module having the ultimate verification value obtained as a result of the secure boot sequence verifies the entire environment including the virtual machine and the management unit, with the use of the ultimate verification value.

Further, in the information processing device, the predetermined arithmetic operation for verification is a hash operation and each verification value is a hash value.

Further, in the information processing device, each certificate shows the dependency relation between relevant virtual machines as well as between a relevant virtual machine and the management unit.

With the configuration stated above, each certificates proves the dependency relation between relevant virtual machines as well as between a relevant virtual machine and the management unit. That is, each certificate proves the dependency relation not only between virtual machines but also with the management unit. Thus, each certificate guarantees that the dependency relation among the virtual machines and the management unit has not been tampered with, and ultimately guarantees that the virtual machines and the management unit correctly operate in compliance with the desired dependency relation.

Further, in the information processing device, the plurality of virtual machines activate in the order determined according to the dependency relation between the certificates each showing the dependency relation of a corresponding virtual machine with another virtual machine as well as with the management unit.

With the configuration stated above, each of the plurality of virtual machines activates with reference to a corresponding certificate proving the dependency relation with one or more other virtual machines as well as with the management unit, so that the virtual machines are activated in the order determined according to the certificates. Consequently, it is guaranteed that the virtual machines and the management unit are activated in a mutually related manner in a desired order determined in advance.

Further, in the information processing device, each of the plurality of virtual machines activates with reference to a corresponding certificate having the dependency relation with one or more other virtual machine as well as with the management unit, so that the virtual machines are activated in the other determined according to the dependency relation of the certificates. In addition, one of the tamper-resistant modules having the ultimate verification value as a result of the activation sequence verifies the entire environment of all the virtual machine based on the ultimate verification value.

With the configuration stated above, it is ensured that each of the plurality of the virtual machines activates with reference to a corresponding certificate having the dependency relation with one or more other virtual machine as well as with the management unit, so that the virtual machines are activated in the other determined according to the dependency relation of the certificates. It is also ensured that one of the tamper-resistant modules having the ultimate verification value as a result of the activation sequence verifies the entire environment of all the virtual machine based on the ultimate verification value. In this way, it is avoided that the plurality of virtual machines separately activate on a stakeholder-by-stakeholder basis, without chaining the activation sequence.

Further, the plurality of stakeholders of the information processing device is in one of a first stakeholder model, a second stakeholder model, and a third stakeholder model. In the first stakeholder model, each stakeholder only uses a tamper-resistant module corresponding to that stakeholder. In the second stakeholder model, one stakeholder uses a specific tamper-resistant module corresponding to the specific stakeholder and also uses a region of a tamper-resistant module corresponding to another stakeholder. In the third stakeholder model, a specific stakeholder does not have any tamper-resistant module of its own and only uses the entire region of a tamper-resistant module corresponding to another stakeholder. Each virtual machine refers to a corresponding certificate expressing a stakeholder model of the relevant stakeholder and thus showing dependency relation among virtual machines and the management unit. With the use of the certificates, the virtual machines activate in the order determined with the use of the certificates.

With the configuration stated above, each of the plurality of virtual machine activates with reference to a corresponding certificate showing the stakeholder model relating to a plurality of stakeholders including the one corresponding to the management unit, so that the plurality of virtual machines activate in the order determined according to the certificates. The ultimate verification value is a value obtained as a result of activating the plurality of virtual machines and the management unit in a mutually related manner. Thus, it is avoided that the plurality of virtual machines including the management unit separately activate on a stakeholder-by-stakeholder basis, without chaining the activation sequence.

Further, the information processing device additionally includes a second tamper-resistant module corresponding to the management unit. Each certificate of a specific virtual machine indicates the stake model type, a pointer indicating another virtual machine chained with the specific virtual machine, one or more PCR numbers each indicating a register in a tamper-resistant module corresponding to the other virtual machine chained with the specific virtual machine, and one or more PCR numbers each indicating a resister in the second tamper-resistant module.

In another aspect of the present invention, the information processing device is a mobile terminal device having the functionality of the information processing device.

In yet another aspect of the present invention, a control method is provided for controlling an information processing terminal having: a plurality of virtual machines in one-to-one correspondence with a plurality of stakeholders; a plurality of tamper-resistant modules in one-to-one correspondence with the plurality of virtual machines; and a management unit operable to manage processes performed between the plurality of virtual machines and the plurality of tamper-resistant modules. Each of the plurality of virtual machines has a certificate having dependency relation with one or more other virtual machines. Each of the plurality of virtual machines is caused to activate with reference to a corresponding certificate. Thus, the plurality of virtual machines are caused to activate in the order determined according to the certificates. The tamper-resistant module having the ultimate verification value obtained as a result of activating the virtual machines in the order determined according to the certificate is caused to verify the entire environment of the plurality of modules with the ultimate verification value.

With the configuration stated above, the dependency relations between the plurality of virtual machines are managed with the used of the certificates. Consequently, it is guaranteed that each dependency relation has not been tampered with, which in turn is effective to guarantee that the plurality of virtual machines run properly in compliance with the dependency relation.

With the configuration stated above, each of the plurality of virtual machines activates with reference to a corresponding certificate proving the dependency relation with one or more other virtual machines, so that the virtual machines are activated in the order determined according to the certificates. Consequently, it is guaranteed that the virtual machines are activated in a mutually related manner in a desired order determined in advance.

In yet another aspect of the present invention, a control program is provided for controlling an information processing terminal having: a plurality of virtual machines in one-to-one correspondence with a plurality of stakeholders; a plurality of tamper-resistant modules in one-to-one correspondence with the plurality of virtual machines; and a management unit operable to manage processes performed between the plurality of virtual machines and the plurality of tamper-resistant modules. Each of the plurality of virtual machines has a certificate having dependency relation with one or more other virtual machines and is caused to activate with reference to a corresponding certificate. Thus, the plurality of virtual machines are caused to activate in the order determined according to the certificates. The tamper-resistant module having the ultimate verification value obtained as a result of activating the virtual machines in the order determined according to the certificate is caused to verify the entire environment of the plurality of modules with the ultimate verification value.

With the configuration stated above, the dependency relations between the plurality of virtual machines are managed with the used of the certificates. Consequently, it is guaranteed that each dependency relation has not been tampered with, which in turn is effective to guarantee that the plurality of virtual machines run properly in compliance with the dependency relation.

With the configuration stated above, each of the plurality of virtual machines activates with reference to a corresponding certificate proving the dependency relation with one or more other virtual machines, so that the virtual machines are activated in the order determined according to the certificates. Consequently, it is guaranteed that the virtual machines are activated in a mutually related manner in a desired order determined in advance.

According to yet another aspect of the present invention, an integrated circuit is provided for use in an information processing device and includes: a plurality of virtual machines in one-to-one correspondence with a plurality of stakeholders; a plurality of tamper-resistance modules in one-to-one correspondence with the plurality of virtual machines; and a management unit operable to manage processes performed between the plurality of virtual machines and the plurality of tamper-resistance modules. Each of the plurality of virtual machines has a certificate having dependency relation with one or more of the other virtual machines.

With the configuration stated above, the dependency relations between the plurality of virtual machines are managed with the used of the certificates. Consequently, it is guaranteed that each dependency relation has not been tampered with, which in turn is effective to guarantee that the plurality of virtual machines run properly in compliance with the dependency relation.

(6) Any of the embodiments and modifications may be combined.

### [Industrial Applicability]

With the use of a secure boot control method for virtual machines, according to the present invention, each of the plurality of virtual machines activates with reference to a corresponding certificate proving the dependency relation with one or more other virtual machines, so that the virtual machines are activated in the order determined according to the certificates. Consequently, the ultimate verification value is obtained as a result of chaining the verification values of the mutually related virtual machines. Thus, it is avoided the plurality of virtual machines separately activate on a stakeholder-by-stakeholder basis without chaining the activation sequence.

## Claims

1. An information processing device on which a plurality of virtual machines run, the information processing device comprising:
a dependency information storage unit that stores therein dependency information for each virtual machine, each piece of dependency information indicating whether a corresponding virtual machine uses one or more functions of another virtual machine or does not use any function of another virtual machine; and
a virtual machine management unit operable to manage activation of the virtual machines, wherein
if a piece of dependency information for a virtual machine targeted to be activated indicates that one or more functions of another virtual machine are used, the virtual machine management unit is operable to:
determine that the target virtual machine depends on the other virtual machine; and
control an activation order of the virtual machines so that the target virtual machine is activated after the other virtual machine is activated.

2. The information processing device according to claim 1, further comprising:
a plurality of state storage units in one-to-one correspondence with the virtual machines, each state storage unit storing therein verification information used to verify integrity of a function of a corresponding virtual machine, wherein
if the target virtual machine to be activated depends on another virtual machine, the virtual machine management unit is operable to:
read, from the state storage unit corresponding to the other virtual machine, verification information for each function used by the target virtual machine; and
set contents of the state storage unit of the target virtual machine to reflect the read pieces of verification information.

3. The information processing device according to claim 2, wherein
each state storage unit has a plurality of storage areas, and each piece of verification information used to verify a function of the virtual machine corresponding to the state storage unit is held in one of the storage areas, and
if the piece of dependency information for the target virtual machine indicates that one or more functions of another virtual machine are used, the virtual machine management unit is operable to set the contents of the state storage unit of the target virtual machine so as (i) to reflect every piece of verification information held in storage areas corresponding to the one or more functions of the other virtual machine used by the target virtual machine and (ii) not to reflect any piece of verification information held in storage areas not corresponding to the one or more functions of the other virtual machine used by the target virtual machine.

4. The information processing device according to claim 3, further comprising:
a plurality of tamper-resistant modules in one-to-one correspondence with the virtual machines, wherein
each state storage unit is included in a corresponding one of the tamper-resistant modules, and
functions of each virtual machine are implemented by one of the tamper-resistant modules corresponding to the virtual machine.

5. The information processing device according to claim 3, wherein
each virtual machine corresponds to one of a plurality of stakeholders,
each stakeholder is one of stakeholder models including:
a first stakeholder model in which a virtual machine corresponding to the stakeholder only uses functions of the virtual machine;
a second stakeholder model in which a virtual machine corresponding to the stakeholder uses less than all functions of another virtual machine; and
a third stakeholder model in which a virtual machine corresponding to the stakeholder uses all functions of another virtual machine,
each piece of dependency information indicates whether a stakeholder model of a corresponding virtual machine is the first, second or third stakeholder models, and
the virtual machine management unit is operable to identify the stakeholder model of the target virtual machine to be activated, based on the dependency information for the target virtual machine.

6. The information processing device according to claim 5, wherein
each piece of dependency information includes:
information indicating another virtual machine having one or more functions used by a virtual machine corresponding to the piece of dependency information; and
information indicating one or more storage areas of the other virtual machine, each storing a piece of verification information for the one or more functions used by the virtual machine corresponding to the piece of dependency information.

7. The information processing device according to claim 6, wherein
if the piece of dependency information for the target virtual machine to be activated includes information indicating less than all storage areas of another virtual machine as the storage areas each storing a piece of verification information for a function used by the target virtual machine, the virtual machine management unit is operable to determine that the stakeholder model of the target virtual machine is the second stakeholder model.

8. The information processing device according to claim 6, wherein
if the piece of dependency information for the target virtual machine to be activated includes information indicating all storage areas of another virtual machine as the storage areas each storing a piece of verification information for a function used by the target virtual machine, the virtual machine management unit is operable to determine that the stakeholder model of the target virtual machine is the third stakeholder model.

9. The information processing device according to claim 2, wherein
each function of the virtual machines is implemented by one or more modules,
each time a module implementing a function of one of the virtual machines is activated, the state storage unit of the virtual machine is operable to update the verification information held therein, by accumulating information indicating the activated module along with the currently held verification information, and
the virtual machine management unit is operable to store, as an initial value of the verification information, the verification information for each function used by the target virtual machine to the state storage unit of the target virtual machine, so that the contents of the state storage unit of the target virtual machine reflect the verification information of each function of the other virtual machine used by the target virtual machine.

10. The information processing device according to claim 9, wherein
upon completion of activation of all the virtual machines in the other controlled by the virtual machine management unit, the information processing device is operable to verify integrity of the entire information processing device based on the pieces of verification information held in the state storage units.

11. The information processing device according to claim 9, further comprising:
a receiving unit operable to receive an authentication request from an external server; and
a transmitting unit operable to transmit, upon completion of activation of all the virtual machines in the other controlled by the virtual machine management unit, the pieces of verification information held in the state storage units to the external server.

12. The information processing device according to claim 2, further comprising:
a management state storage unit operable to store verification information used to verify integrity of one or more functions of the virtual machine management unit,
wherein
each piece of dependence information further includes management dependency information indicating whether a corresponding virtual machine uses one or more functions of the virtual machine management unit or does not use any function of the virtual machine management unit, and
if the piece of dependency information corresponding to the target virtual machine to be activated indicates that the target virtual machine uses one or more functions of the virtual machine management unit, the virtual machine management unit is operable to:
read, from the management state storage unit, verification information corresponding to each function used by the target virtual machine, and
set the contents of the state storage unit of the target virtual machine to reflect the read pieces of verification information.

13. A mobile terminal on which a plurality of virtual machines run, comprising:
a dependency information storage unit that stores therein dependency information for each virtual machine, each piece of dependency information indicating whether a corresponding virtual machine uses one or more functions of another virtual machine or does not use any function of another virtual machine; and
a virtual machine management unit operable to manage activation of the virtual machines, wherein
if a piece of dependency information for a virtual machine targeted to be activated indicates that one or more functions of another virtual machine are used, the virtual machine management unit is operable to:
determine that the target virtual machine depends on the other virtual machine; and
control an activation order of the virtual machines so that the target virtual machine is activated after the other virtual machine is activated.

14. A control method for an information processing device on which a plurality of virtual machines run, the information processing device including a dependency information storage unit that stores therein dependency information for each virtual machine, each piece of dependency information indicating whether a corresponding virtual machine uses one or more functions of another virtual machine or does not use any function of another virtual machine,
the control method comprising the steps of:
determining that the target virtual machine depends on the other virtual machine; and
controlling an activation order of the virtual machines so that the target virtual machine is activated after the other virtual machine is activated.

15. A recording medium storing a control program for an information processing device on which a plurality of virtual machines run,
the information processing device including a dependency information storage unit that stores therein dependency information for each virtual machine, each piece of dependency information indicating whether a corresponding virtual machine uses one or more functions of another virtual machine or does not use any function of another virtual machine,
the control program comprising code operable to cause the information processing device to perform the steps of:
determining that the target virtual machine depends on the other virtual machine; and
controlling an activation order of the virtual machines so that the target virtual machine is activated after the other virtual machine is activated.

16. An integrated circuit for controlling an information processing device on which a plurality of virtual machines run,
the information processing device including a dependency information storage unit that stores therein dependency information for each virtual machine, each piece of dependency information indicating whether a corresponding virtual machine uses one or more functions of another virtual machine or does not use any function of another virtual machine,
the integrated circuit is operable to manage activation of the virtual machines, wherein
if a piece of dependency information for a virtual machine targeted to be activated indicates that one or more functions of another virtual machine are used, the integrated circuit is operable to:
determine that the target virtual machine depends on the other virtual machine; and
control an activation order of the virtual machines so that the target virtual machine is activated after the other virtual machine is activated.
